# FASCICULE DE BREVET EUROPEEN

(11) **EP 3 577 079 B1**
(45) Date de publication et mention de la délivrance du brevet: **27.10.2021**
(21) Numéro de dépôt: 18706423.3
(22) Date de dépôt: 05.02.2018
(51) Int. Cl.: C02F 1/28, B01J 20/26, B01J 20/28, B01J 20/30, D01F 1/10, D01F 11/06, C02F 101/00, C02F 101/20

(54) **FIBRES GONFLABLES ET INSOLUBLES ET LEUR UTILISATION DANS LE TRAITEMENT DES EFFLUENTS AQUEUX**
QUELLBARE UND UNLÖSLICHE FASERN UND DEREN VERWENDUNG ZUR WASSERBEHANDLUNG
SWELLABLE AND INSOLUBLE FIBERS AND USE THEREOF IN WATER TREATMENT

(30) Priorité: 06.02.2017 FR 1750967
(43) Date de publication de la demande: 11.12.2019
(73) Titulaire: Commissariat à l'Energie Atomique et aux Energies Alternatives, 75015 Paris (FR); Ajelis, 91260 Juvisy-sur-Orge (FR)
(72) Inventeur: VIEL, Pascal, 92190 Meudon (FR); SHILOVA, Ekaterina, 91260 Juvisy-Sur-Orge (FR)
(74) Mandataire: IPAZ
(86) Numéro de dépôt international: PCT/EP2018/052754
(87) Numéro de publication internationale: WO 2018/141947

(56) Documents cités:
- CN-A- 103 386 298
- FR-A1- 3 019 547
- US-A1- 2016 280 678
- SPIRO D. ALEXANDRATOS ET AL: "Synthesis and Ion-Binding Affinities of Calix[4]arenes Immobilized on Cross-Linked Polystyrene", MACROMOLECULES, vol. 34, no. 2, 1 janvier 2001 (2001-01-01), pages 206-210, XP055161358, ISSN: 0024-9297, DOI: 10.1021/ma0012550

## Description

La présente invention concerne des fibres polymères gonflables et insolubles dans un effluent essentiellement aqueux et leur utilisation dans le traitement de ces effluents.

La pollution de l'eau par des métaux lourds est un problème environnemental croissant au cours des dernières décennies, qui requiert une action immédiate et urgente.

Les métaux lourds, tels que Zn, Co, Fe, Cr et Cu, sont largement utilisés dans l'industrie des traitements de surface, en relation avec le secteur automobile ou de la microélectronique, pour la mise en œuvre de la galvanoplastie, des procédés electroless ou de l'électrozingage. Malgré le progrès technique, les effluents liquides rejetés par ces industries contiennent toujours inévitablement des traces de métaux lourds, principalement sous forme de sels, qui sont dangereux pour la santé publique et l'environnement et nécessitent un traitement avant leur rejet dans l'environnement.

A ce jour, les normes européennes régulant les taux des différents éléments rejetés sont de plus en plus strictes. Pour les métaux lourds comme le cuivre, le seuil d'autorisation de rejet pour les effluents classiques est descendu de 2mg/L en 1985 à moins de 0,5mg/L depuis 1998, lorsque la quantité journalière de rejet dépasse 5g/jour.

L'industrie nucléaire a aussi le besoin de faire face à la question du traitement des effluents liquides contaminés par des éléments radioactifs, lesquels peuvent être produits lors des opérations de décontamination ou bien lors d'accidents. Par exemple, la catastrophe de Fukushima a rendu des quantités gigantesques d'eau de mer radioactive du fait de la présence de césium radioactif. Ce sont ces milliers de mètre cube d'eau de mer qu'il faut traiter afin d'éliminer les traces de césium radioactif. La difficulté est de capter les atomes de césium présents en très faibles concentrations, de 10⁻⁷ à 10⁻¹² mol.L⁻¹, parmi des atomes de sodium, qui sont au moins 1000 fois plus concentrés.

Pour les terres rares, en plus du souci de santé publique et d'environnement, la récupération et la séparation de ces éléments dans un effluent présentent également un enjeu économique considérable. En effet, les terres rares sont utilisées en quantité non négligeable dans les produits de haute technologie et, à cause de leur caractère stratégique et de leur difficulté d'approvisionnement, leur recyclage devient très attractif.

Par conséquent, le traitement des effluents liquides industriels devient un problème majeur dans notre société. Il existe actuellement dans les industries, notamment les industries de traitement de surface, électronique, ou nucléaire, une demande expresse pour de nouveaux procédés plus propres, peu onéreux et pouvant descendre à un seuil de performance jusqu'à dix fois inférieur aux normes en vigueur.

La plupart des méthodes conventionnelles de traitement d'effluents comprennent un traitement primaire suivi d'un traitement secondaire. Le traitement primaire mis en œuvre par coagulation et/ou précipitation permet une élimination des différentes matières polluantes solides. Si ce traitement permet aussi un abaissement de 90% à 95% des métaux présents dans un effluent, il ne permet pas toujours d'atteindre les exigences des normes. Il est nécessaire d'employer un traitement secondaire pour diminuer davantage la teneur en métaux lourds.

Nous pouvons citer comme exemple de méthodes conventionnelles pouvant être utilisées pour un traitement secondaire: les résines échangeuses d'ions, la filtration sur membrane, l'extraction liquide-liquide. Certaines d'entre elles sont assez efficaces, mais ont malheureusement des limites inhérentes telles que les conditions de fonctionnement rigoureux et la production de contaminants secondaires.

Les résines échangeuses d'ions sont largement utilisées pour traiter les effluents contenant des métaux lourds et possèdent de nombreux avantages : leur capacité de traitement, une certaine sélectivité de capture des métaux et leur cinétique rapide par rapport aux autres techniques par exemple membranaires. La plupart des résines sont constituées de billes de polymères synthétiques de très petite taille (50-500 µm) entre lesquelles l'effluent passe pour se décontaminer. L'efficacité de ces résines est cependant limitée de fait par leur conception. En effet, la grande majorité des résines n'atteignent que 50% de leur capacité d'échange du fait de leur fabrication qui nécessite des fonctionnalisations chimiques qui n'ont pas eu lieu sur tous les sites potentiellement accessibles. D'autre part les résines échangeuses d'ions sont surtout efficaces sur leur périphérie où l'échange peut s'opérer rapidement. La diffusion du liquide en phase solide étant très lente, des canaux de diffusion sont conçus dans la fabrication de ces résines pour améliorer la pénétration de l'effluent au cœur de la bille de résines. Néanmoins la diffusion du liquide en profondeur de résines reste freinée et cela contribue à diminuer la capacité utile des résines. Il serait possible de compenser ce problème en diminuant drastiquement le diamètre des billes pour augmenter le ratio surface/volume. Mais des problèmes de perte de charge (colmatage) et des risques de pulvérulence apparaîtraient alors.

Un autre inconvénient majeur de cette technique est la nécessité d'utiliser de grandes quantités d'acides et de bases concentrés pour réaliser les opérations de régénération. Il est admis que la régénération d'un kilogramme de résines échangeuses d'ions peut nécessiter l'utilisation de plus de 50 litres d'acides et/ou de bases qui deviennent des effluents secondaires. Il est important de minimiser ces effluents secondaires.

Une autre technologie développée depuis une vingtaine d'année consiste à utiliser des techniques membranaires, telles que la microfiltration, la nanofiltration, l'ultrafiltration et l'osmose inverse. Cependant, ces techniques à ce jour sont rarement utilisées dans la séparation des métaux, car les membranes peuvent être mécaniquement fragiles et ne présentent pas de propriétés de sélectivité vis-à-vis des métaux. Par ailleurs, ces techniques sont consommatrices d'énergie.

Plus récemment, des fibres naturelles, telles que des fibres provenant de coton, champignon, cactus, copeaux d'écorce de bois, déchets de l'agriculture vivrière sont utilisées pour la filtration et l'extraction de métaux. Le coût de fabrication de ces fibres est très intéressant, mais leurs performances et surtout leurs sélectivités restent très modestes. Par exemple, la performance d'une membrane obtenue à partir d'un mélange de fibres naturelles en coton et en soie pour capturer le cuivre n'est que de 2,88 mg/g (Ki et al., Membrane Sci., 2007, 302, 20).

Un dernier développement technologique consiste à utiliser des nanofibres, qui ont des diamètres micrométriques ou submicroniques et sont fabriquées soit par électrofilage d'une solution de polymère sous haute tension (électrospinning) ou par application d'une force centrifuge (centrifugal spinning) sur une solution de polymère. Cependant, l'utilisation industrielle de ces nanofibres, souvent sous forme de membrane, reste, à ce jour, dans le domaine de l'ingénierie tissulaire, ou encore pour réaliser une filtration mécanique.

A ce jour, plusieurs publications scientifiques ont évoqué l'application des membranes de nanofibres obtenues à partir de différents polymères pour capturer les ions métalliques en solution. Cependant, la performance de ces membranes n'est pas satisfaisante et surtout ne permet pas une productivité à grande échelle.

Ignatova et al. (Macromol. Rapid Commun., 2008, 29, 1871-1876) décrivent l'utilisation de nanofibres de polystyrène associées avec des calixarènes pour capter du nickel. Aucune capacité de capture n'est évoquée dans cet article. Le polystyrène est reconnu comme très hydrophobe et peu gonflable dans l'eau.

On trouve aussi de nombreuses publications sur des fibres de polyacrylonitrile ou de ses dérivés. (F. Huang, Materials, 2013, 6, 969-980). Le polyacrylonitrile est lui aussi reconnu pour être peu hydrophile et donc peu gonflable dans l'eau.

Wang et al. (J. Membr. Sci., 2011, 379 191-199) ont analysé une membrane obtenue par électrospinning à partir d'une solution d'alcool polyvinylique (PVA) et de polyéthylènimine (PEI). Sa capacité pour capturer du cuivre est de 67,16 mg/g. Cependant, la régénération de cette membrane nécessite, soit des solutions acides ou basiques très fortes, soit un complexant organique puissant et toxique, tel que l'EDTA. Par ailleurs, ces polymères ne sont pas suffisamment hydrophiles pour le traitement d'effluents industriels essentiellement aqueux.

Xiao et al. (J. Appl. Polym. Sci., 2010, 116, 2409) ont décrit une membrane obtenue par électrospinning à partir d'une solution d'acide polyacrylique (PAA) et d'alcool polyvinylique (PVA). Sa performance pour capturer le cuivre est d'environ 10 mg/g et reste donc très faible. L'incorporation du PVA dans les polymères initiaux diminue les propriétés hydrophiles des nanofibres pour limiter la solubilisation du PAA.

Li et Hsieh *(Polymer,* 2005, 46, 5133) ont décrit une possibilité de réticuler une nanofibre de PAA pur avec des beta-cyclodextrines. Les auteurs ont choisi de faire réagir les fonctions alcools des cyclodextrines avec les fonctions anhydrides du PAA qui se forment par recuit à 140°C. Cependant, la perméabilité de ce matériau n'est pas suffisante, car la teneur en cyclodextrine d'environ 30% reste élevée. Par ailleurs, les tests pour ce matériau sont réalisés dans un milieu aqueux acide de pH 2-7 et sur une durée maximale de 24h. Cette gamme de pH n'a pas d'intérêt technique dans le domaine du retraitement des métaux par le PAA, car ce dernier acquiert sa forme complexante dans les milieux basiques.

Comme alternative à l'électrospinning, des techniques basées sur la force centrifuge (centrifugal spinning) ont été développées récemment, telles que par exemple, la technique forcespinning® (Sarkar et al., Materials Today, 2010, 13(11), 12-14). Cependant, à ce jour, il n'y a pas d'application des nanofibres obtenues par cette technologie dans la séparation d'ions en solution. Ce procédé reste très peu productif. Des autres documents pertinents sont FR3019547 A1, US 2016/280678 A1, CN 103 386298 A and Spiro D. Alexandratos et al. "Synthesis and ion-binding affinities of calix[4]arenes Immobilized on Cross-linked polystyrene", Macromolecules, vol. 34, no. 2, pages 206-210.

Les nanofibres décrites dans ces publications antérieures ne peuvent pas être appliquées à l'échelle industrielle pour extraire et séparer les métaux, car d'une part elles ne sont pas suffisamment hydrophiles dans un effluent essentiellement aqueux et n'ont pas une capacité ou spécificité satisfaisante pour capturer les métaux et d'autre part elles nécessitent en plus un temps de capture ou de régénération très long.

La technologie de filage à sec ou de filage au mouillé utilisée dans l'industrie textile est une autre technique pour fabriquer des fibres de polymère non-thermoplastique avec une plus grande productivité. Les fibres fabriquées par cette technique, en raison de leur grande capacité absorbante de l'eau, sont utilisables dans les couches culottes. Cependant, ce type de fibres ne peut pas être utilisé à ce jour dans le traitement des effluents industriels, car elles se transforment en un gel au contact de l'eau et, par conséquent, colmatent les colonnes de filtration et ne permettent pas d'être régénérées.

Pour répondre à cette problématique, il y a un très fort intérêt de développer des fibres ayant une très forte perméabilité à l'eau et qui ne se dissolvent pas. Pour améliorer les propriétés de ces fibres vis-à-vis de cibles métalliques difficiles à extraire ou interférées par des éléments de peu d'intérêt, ces fibres pourront contenir des molécules complexant possédant des propriétés de capture très spécifiques.

L'invention a pour objet de mettre à disposition un matériau ayant une meilleure performance pour capturer les métaux, notamment les sels métalliques issus des métaux lourds, des terres rares, des métaux alcalins, des alcalino-terreux, ou des actinides, dans leurs formes isotopiques stables ou instables, et restant faciles à régénérer afin de récupérer les métaux capturés.

L'invention est décrite dans les revendications indépendantes 1, 8, 12 et 14 qui comprennent les caractéristiques essentielles de l'invention. Des autres modes de réalisation sont décrits dans les revendications dépendantes 2-7, 11 et 13.

L'invention porte donc sur des fibres obtenues par filage à sec ou filage au mouillé, insolubles dans l'eau et très gonflables dans un effluent essentiellement aqueux et sont susceptibles d'être obtenues par le procédé comprenant les étapes suivantes :
(a) l'obtention de fibres par filage à sec ou filage au mouillé à partir d'une solution de synthèse, ladite solution de synthèse comprenant :
   (i) au moins un polymère initial hydrophile et hydrosoluble choisi dans le groupe comprenant :
      - l'acide polyacrylique, le polyacrylate de sodium, ou les copolymères de l'acide polyacrylique,
      - les dérivés anioniques du polystyrène, tels que le polystyrène sulfonate ou les copolymères du polystyrène sulfonate,
      - les dérivés cationiques du polystyrène, tels que le polystyrène trialkylbenzyl ammonium,
      - la poly(4-vinylpyridine) ou ses dérivés,
      - l'alcool polyvinylique ou ses dérivés hydrophiles,
      - la polyvinylpyrrolidone, ses dérivés, ou ses copolymères, ou
      - un mélange de ceux-ci,
      ledit polymère initial hydrophile et hydrosoluble ayant une masse moléculaire de 1x10⁴ à 1,5x10⁶, notamment de 1x10⁴ à 5x10⁵, la teneur en polymère initial hydrophile et hydrosoluble dans la solution de synthèse étant de 5 à 50 %, de préférence de 10 à 30 %, en poids de la solution de synthèse,
   (ii) éventuellement au moins un additif choisi parmi :
      - un agent réticulant de 0,05 à 40 %, notamment de 1 à 40%, particulièrement de 5 à 20%, notamment de 15% en poids de polymère initial hydrophile et hydrosoluble,
      - une molécule complexante de 1- 40%, notamment de 1 à 30% en poids de polymère initial hydrophile et hydrosoluble, ladite molécule complexante étant choisie parmi : un calixarène, un éther couronne, ou
      - un mélange de ceux-ci ;
         (b) la stabilisation par traitement thermique des fibres obtenues dans l'étape
         (a) pour obtenir des fibres insolubles mais gonflables dans un effluent essentiellement aqueux,
   lesdites fibres ayant un taux de réticulation compris entre 5 et 40%, particulièrement de 5 à 20 %, notamment de 15%.

La présente invention met à disposition pour la première fois une combinaison des choix spécifiques des paramètres qui permettent de produire des fibres à la fois insolubles et gonflables.

Par rapport aux fibres connues dans l'art antérieur, telles que celles décrites dans FR 3 019 547, la présente invention met à disposition pour la première fois les fibres adaptées à la production par filage au sec ou au mouillé et capables d'éviter ou de retarder la transformation en structure gélifiée tout en maintenant un bon pouvoir de gonflement/absorption des fibres pour que le liquide continue à circuler au travers.

En effet, afin que les fibres stables puissent être obtenues par filage à sec ou filage au mouillé, les fibres à l'issu du filage doivent pouvoir être séchées rapidement et avoir une viscosité contrôlée, ce qui permet de conserver la forme des fibres et de créer une distance satisfaisante entre les fibres. Cette distance est importante pour augmenter davantage la surface de contact avec l'effluent à traiter.

Par ailleurs, il est nécessaire de concilier le mieux l'insolubilité et le gonflement des fibres dans une solution aqueuse afin à la fois de conserver le plus possible la structure fibreuse et la capacité d'absorption.

Les fibres insolubles de la présente invention présentent plusieurs avantages par rapport aux matériaux actuellement utilisés dans le traitement d'effluents essentiellement aqueux, notamment par rapport aux résines échangeuses d'ions.

L'un des avantages principaux est leur performance par rapport aux méthodes conventionnelles, notamment les résines échangeuses d'ion, pour capturer les métaux, notamment les sels métalliques issus des métaux lourds, des terres rares, des métaux alcalins, des alcalino-terreux, ou des actinides, dans leurs formes isotopiques stables ou instables. Cette performance est liée à un échange rapide des sels entre l'effluent à traiter et lesdites fibres, grâce à leur surface spécifique très élevée et leur propriété de gonflement très importante de sorte que c'est réellement tout le volume de la fibre qui participe à l'interaction avec l'effluent. Il en résulte ainsi de plus faibles distances à parcourir dans la phase solide par le métal à capter. Ces bénéfices sont observables également sur les étapes de régénération des fibres. En effet, le volume d'élution pour récupérer les métaux captés par les fibres insolubles de l'invention est réduit par rapport à celui nécessaire pour les résines de même capacité.

A titre comparatif, la surface spécifique d'un matériau constitué par des fibres de l'invention peut être 10 fois plus élevée que celle des résines obtenues à partir d'une même quantité de polymère initial.

De plus, lorsque ces fibres contiennent des molécules complexantes leur conférant des propriétés de sélectivité vis-à-vis des ions cibles, ceux-ci, grâce aux propriétés de gonflement des fibres, peuvent accéder facilement au cœur même des fibres pour y être captés. Ceci n'est pas possible avec les résines qui doivent être post-fonctionnalisées pour posséder une certaine sélectivité, post-fonctionnalisation s'effectuant essentiellement sur leur périphérie et qui, pour des raisons stériques, réduit l'accès au cœur des résines, diminuant ainsi leur capacité effective.

Enfin, la possibilité d'incorporer facilement et de façon stable des molécules complexantes hydrophobes, telles que des calixarènes par exemple, par simple rétention au cœur des fibres, permet d'obtenir, très simplement, une grande variété de fibres aux sélectivités dédiées.

Dans le cadre de l'invention, on entend par « fibre », des fibres micrométriques dont le diamètre est de 10 µm à 100 µm, notamment de 10 à 80 µm, plus particulièrement de 20 à 50 µm.

Les diamètres des fibres, typiquement de 20 à 50 µm, sont typiquement 10 fois plus faibles que les diamètres des billes de résines échangeuses d'ions. Ainsi les fibres sont moins soumises aux phénomènes osmotiques qui sont responsables de la dégradation des billes de résines.

On entend par « effluent essentiellement aqueux » un effluent aqueux contenant éventuellement des traces de solvants organiques jusqu'à 5%. Les solvants organiques peuvent notamment être présents dans un effluent, lorsque ledit effluent est issu d'un procédé liquide-liquide conventionnel pour l'extraction des terres rares ou des métaux lourds.

Le terme « insoluble » dans le cadre de l'invention signifie que la morphologie des fibres ne subit pas de modifications détectables à l'aide d'un microscope électronique après au moins 24 heures d'immersion dans un effluent essentiellement aqueux tel que défini précédemment.

Le terme « gonflable » se réfère à la capacité d'un matériau, en l'occurrence des fibres insolubles de l'invention, de laisser l'eau pénétrer à l'intérieur et dans tout le volume des fibres. Dans le cadre de l'invention, la totalité ou au moins plus de 95% des groupements chimiques des sites actifs (tels que -COOH ou -COO⁻ selon le pH de la solution pour les fibres de PAA, par exemple) des fibres de l'invention sont en contact avec l'effluent aqueux.

La propriété de gonflement des fibres insolubles de l'invention permet aux sites actifs même s'ils sont présents dans la profondeur d'une fibre de pouvoir être directement en contact avec l'effluent à traiter et par conséquent de rester opérationnel pour capturer les métaux. Un site actif est un groupement chimique ou une structure chimique constituée par plusieurs groupements chimiques capable de former un complexe ou un sel avec un métal ou un élément. Dans le cadre de la présente invention, un site actif peut être compris comme un domaine complexant, il peut être porté ou formé par les chaines de polymères ou par une molécule complexante.

Conformément à l'invention, le contact des fibres insolubles de l'invention avec un effluent essentiellement aqueux produit un gonflement rapide et complet compris entre 30 secondes et 3 min.

On entend par « gonflement complet » le fait que la totalité ou au moins plus de 95% des groupements chimiques des sites actifs des fibres de l'invention sont en contact avec l'effluent aqueux.

Etant donné que les polymères initiaux utilisés pour produire les fibres insolubles de l'invention sont des polymères hydrophiles et hydrosolubles, l'insolubilité, c'est-à-dire la résistance à la solubilisation, des fibres de l'invention est conférée par la réticulation et la capacité de gonflement de ces fibres et est influencée essentiellement par le taux de réticulation desdites fibres.

Le taux de réticulation correspond à la proportion de liaisons chimiques covalentes entre chaines polymères voisines. Il est calculé en pourcentage de motifs monomères des chaines polymères engagées dans ces liaisons interchaines. Il peut être mesuré par calorimétrie différentielle à balayage.

Le taux de réticulation est en relation avec la masse moléculaire de polymère initial hydrophile et hydrosoluble et la quantité d'agent réticulant, lorsqu'il est utilisé.

Ce taux influence à la fois, positivement l'insolubilité des fibres produites par ledit polymère et, négativement leur capacité de gonflement. Autrement dit, à un taux de réticulation élevé correspond une plus grande résistance à la solubilisation des fibres mais une plus faible capacité de gonflement desdites fibres. Le taux de réticulation doit donc être optimisé en tenant compte de ces deux paramètres antagonistes.

L'utilisation privilégiée d'un polymère de poids moléculaire élevé conduit à diminuer le taux de réticulation nécessaire pour que les fibres satisfassent aux critères d'insolubilité et de gonflement. Ainsi les Inventeurs ont trouvé qu'un taux de réticulation limité entre 5 et 40%, particulièrement de 5 à 20%, plus particulièrement de 15 à 20%, notamment à 15% ou à 20%, pour les fibres insolubles et une masse moléculaire de 1x10⁴ à 1,5x10⁶ pour le polymère initial sont respectivement les valeurs les plus optimales pour ces deux paramètres. Cette combinaison permet de préserver la propriété de gonflement de polymère initial, tout en assurant l'insolubilité des fibres de l'invention.

Les Inventeurs ont constaté que, pour un taux donné d'agent réticulant, la réticulation des polymères ayant une masse moléculaire élevée est plus efficace que celle des polymères avec des masses moléculaires faibles. En effet, lorsque la masse moléculaire d'un polymère initial est trop petite, il est nécessaire d'augmenter le pourcentage d'agent réticulant pour obtenir le même taux de réticulation. Un pourcentage trop élevé d'agent réticulant dans une solution de synthèse initiale entraîne une perte des propriétés de gonflement, recherchées pour les fibres de l'invention.

En revanche, lorsque la masse moléculaire de polymère est trop élevée, ce polymère présente une trop faible solubilité dans l'eau. Une solution de synthèse ayant une trop faible concentration en polymère soluble ne permet pas de produire des fibres à partir de cette solution de synthèse.

Autrement dit, si deux fibres sont produites à partir de deux types de l'acide polyacrylique de masse moléculaire différente, ces deux fibres peuvent avoir la capacité de gonflement et l'insolubilité très différentes.

D'une autre part, lorsqu'on utilise un polymère de faible masse moléculaire, il est possible d'atteindre un taux de réticulation élevé en ajoutant une quantité plus importante de réticulant et/ou par un traitement thermique.

Conformément à la présente invention, on entend par « masse moléculaire » la masse molaire en masse.

### • Polymère initial

Les polymères initiaux hydrophiles et hydrosolubles confèrent aux fibres insolubles de l'invention leurs propriétés de perméabilité à l'eau. Les polymères susceptibles d'être utilisés en tant que polymère initial hydrophile et hydrosoluble dans le cadre de l'invention sont sélectionnés pour leurs capacités à capter des sels métalliques selon un principe de type résine échangeuse d'ions. Par exemple, l'acide polyacrylique ou la poly(4-vinylpyridine) peut être sélectionné lorsque les fibres de l'invention sont mises en œuvre dans les applications requérant une faible sélectivité. Les additifs, notamment les molécules complexant, peuvent être ajoutés pour conférer aux fibres de l'invention des propriétés plus spécifiques.

Les polymères initiaux pour la mise en œuvre de l'invention sont les polymères hydrophiles. Cette affinité pour l'eau permet à l'effluent de pénétrer efficacement le matériau et ainsi de mettre rapidement en contact les métaux ou les éléments à capturer avec les sites actifs.

Conformément à l'invention, ces polymères sont notamment choisis parmi :
- l'acide polyacrylique, le polyacrylate de sodium, ou les copolymères de l'acide polyacrylique,
- les dérivés anioniques de polystyrène, tels que le polystyrène sulfonate ou les copolymères du polystyrène sulfonate,
- les dérivés cationiques de polystyrène, tels que le polystyrène trialkylbenzyl ammonium,
- la poly(4-vinylpyridine) ou ses dérivés,
- l'alcool polyvinylique ou ses dérivés hydrophiles,
- la polyvinylpyrrolidone, ses dérivés, ou ses copolymères, et
- les mélanges de ceux-ci.

On entend par « acide polyacrylique » un homopolymère d'acide acrylique et présentant le motif de répétition suivant :

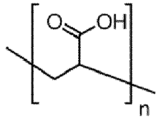

Lorsque le polymère initial est l'acide polyacrylique, il peut comporter les groupements carboxyles sous forme réduite (-COOH) ou ionisée (-COO⁻).

De préférence, le pK_{A} de l'acide polyacrylique en tant que polymère initial dans une solution aqueuse est de 4,25.

Dans un mode de réalisation avantageux de l'invention, la masse moléculaire de l'acide polyacrylique en tant que polymère initial est de 1,3x10⁵ à 2,5x10⁵.

On entend par un copolymère de l'acide polyacrylique un polymère issu de la copolymérisation de l'acide acrylique et un autre monomère, tel que l'acide maléique ou le styrène.

A titre d'exemple, on peut citer les copolymères de l'acide polyacrylique comme le copolymère d'acide acrylique-acide maléique sodium de formule ci-après. 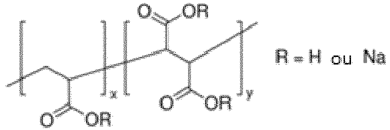 ou un copolymère styrène/acide acrylique de formule ci-après

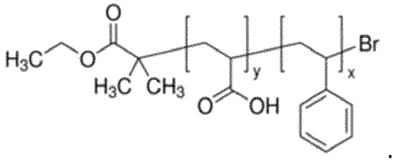

L'acide polyacrylique et ses co-polymères peuvent être utilisés pour capturer les métaux lourds, notamment le cuivre, par l'intermédiaire des groupements carboxyles ionisés.

Conformément à l'invention, un dérivé anionique du polystyrène est un polymère substitué du polystyrène par un groupement anionique tel qu'un groupe sulfonate, phosphate, phosphonate, phosphoryle, carboxyle, tel que le groupe carboxyméthyle.

A titre d'exemple de dérivé anionique du polystyrène peut être cité notamment le polystyrène sulfonate, le polystyrène phosphonate, le carboxypolystyrène, le polystyrène A-COOH.

A titre d'exemple des copolymères du polystyrène sulfonate, on peut citer un copolymère d'acide styrènesulfonique et d'acide maléique de formule ci-après

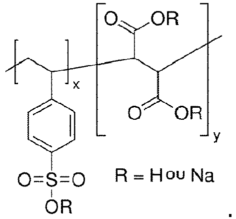

Conformément à l'invention, un dérivé cationique de polystyrène est un polymère substitué du polystyrène par un groupement cationique tel qu'un groupement d'ammonium quaternaire, notamment un groupement d'ammonium trialkyle benzyle, ou un groupement amine tertiaire.

A titre d'exemple de dérivé cationique du polystyrène peut être cité un polystyrène substitué par un groupement d'ammonium trialkyle benzyle, notamment un groupement d'ammonium triméthyle benzyle.

Les dérivés cationiques du polystyrène ont une sélectivité pour les sels anioniques des éléments à capturer, tels que l'anion UO²⁻.

On entend par « poly(4-vinylpyridine) » un homopolymère de 4-vinyl pyridine et présentant le motif de répétition suivant :

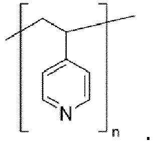

Un dérivé de la poly(4-vinylpyridine) est une poly(4-vinylpyridine) substituée en position méta ou ortho de la pyridine, la poly-3-vinylpyridine ou la poly-2-vinylpyridine, respectivement.

Les groupes pyridines, éventuellement substitués, peuvent complexer les cations des métaux lourds, notamment les dications, telles que Hg²⁺, Cu²⁺.

On entend par « alcool polyvinylique » une famille de polymères obtenus par alcoolyse d'un ester vinylique et contenant une proportion au moins supérieure à 50% du motif élémentaire :-(CH₂CHOH)ₙ-.

Dans le cadre de l'invention, On entend par « dérivé de l'alcool polyvinylique » les copolymères vinylique-alcool vinylique ou le poly(butyral vinylique).

On entend par « polyvinylpyrrolidone » un homopolymère de la *N-*vinylpyrrolidone.

On entend par un copolymère de la polyvinylpyrrolidone un polymère issu de la copolymérisation de la *N*-vinylpyrrolidone et un autre monomère. A titre d'exemple des copolymères de la polyvinylpyrrolidone, on peut citer le poly[(2-éthyldiméthylammonioéthyl méthacrylate éthyle sulfate)-co-(1-vinylpyrrolidone)] (PNR4).

### • Additifs

Une solution de synthèse pour le filage à sec ou le filage au mouillé peut en outre comprendre, en plus du polymère initial hydrophile et hydrosoluble, au moins un additif.

Conformément à l'invention, un additif, lorsqu'il est présent dans une solution de synthèse, peut être soit incorporé dans les fibres de l'invention par réticulation avec les polymères, tel le cas pour un agent réticulant, ou soit simplement immobilisé dans la matrice des fibres lorsque ledit additif est hydrophobe, tel qu'une molécule complexante non réticulante.

Les additifs peuvent être de deux natures : les agents réticulants, comme les agents réticulants chimiques et les molécules complexantes, comme des molécules cages. Les molécules complexantes peuvent agir soit seulement en tant qu'agent de complexation, soit en tant qu'agent de complexation et de réticulation lorsqu'elles comportent, en plus de leurs fonctions complexantes, des fonctions chimiques permettant une réticulation avec les polymères initiaux hydrophiles.

Les molécules complexantes apportent aux fibres de l'invention les spécificités vis-à-vis des métaux à capturer. Elles sont conçues pour capter très sélectivement un sel ou seulement certains sels métalliques.

Selon le besoin de propriétés spécifiques et de la nature hydrophile ou hydrophobe des molécules complexantes, trois cas de figures sont possibles pour la constitution des fibres de la présente invention :
- La réticulation peut être faite par des agents réticulants chimiques connus de l'homme de l'art qui comportent des fonctions chimiques permettant une réticulation avec les polymères initiaux hydrophiles par exemple par voie thermique;
- En présence de molécules complexantes hydrophiles comportant, en plus de leurs fonctions de complexation, des fonctions chimiques permettant une réticulation, la réticulation peut être faite par les molécules complexantes elles-mêmes. La réticulation du polymère initial hydrophile et hydrosoluble par ces molécules complexantes hydrophiles permet de fixer ces dernières dans la structure des fibres et d'éviter leur extraction au cours de l'usage des fibres insolubles de l'invention.
- En présence de molécules complexantes hydrophobes, il n'est pas nécessaire de les fixer par réticulation dans le polymère initial hydrophile et hydrosoluble. Les molécules complexantes hydrophobes peuvent être simplement immobilisées par rétention hydrophobe via un processus d'imprégnation par solvant. Ce phénomène de rétention hydrophobe est suffisamment fort pour éviter l'extraction de ces molécules complexant hydrophobes par un effluent essentiellement aqueux au cours de l'usage des fibres. En revanche, la réticulation du polymère initial hydrophile et hydrosoluble par un autre moyen reste nécessaire pour stabiliser les fibres.

On entend par « agent réticulant » un composé qui relie des chaînes de polymères par des liaisons chimiques, notamment des liaisons covalentes, afin de constituer un réseau de masse moléculaire plus élevée et présentant des propriétés physico-chimiques différentes du polymère initial, par exemple l'insolubilité dans un effluent essentiellement aqueux.

Conformément à l'invention, pour que les fibres à base de polymères hydrophiles et hydrosolubles soient insolubles dans un effluent essentiellement aqueux, il faut que ces fibres soient stabilisées par réticulation avec un taux de réticulation contrôlé. Pour que la réticulation puisse avoir lieu avec un taux de réticulation compris entre 5 et 40%, particulièrement de 5 à 20%, notamment à 15%, la quantité dudit agent réticulant doit être de 0,05 à 40 %, notamment de 1 à 40%, particulièrement de 5 à 20%, plus particulièrement de 15 à 20%, plus particulièrement 15% ou 20%, en poids relativement au poids du polymère initial hydrophile et hydrosoluble dans la solution de synthèse.

D'une façon générale, la quantité d'agent réticulant introduite dans la solution de synthèse est déterminée en fonction de la masse molaire du polymère initial. Ainsi, si la masse molaire du polymère initial est élevée, on choisira un faible pourcentage d'agent réticulant ; si la masse molaire du polymère initial est faible, on choisira plutôt un pourcentage plus élevé pour l'agent réticulant.

Conformément à l'invention, ledit agent réticulant est choisi dans le groupe comprenant :
- une diamine, notamment l'hexaméthylènediamine,
- un polymère hydrophile choisi dans le groupe comprenant un polyéthylène glycol, un polyhydroxyéthyl méthacrylate, le polyvinylpyrrolidone, ses dérivés ou ses copolymères,
- un dibromoalcane en (Ci-Cio), notamment le 1,4-dibromo butane
- un dibromo-p-xylène
- un diiodoalcane en (Ci-Cio) notamment le 1,4-diiodo butane,
- un dichloroalcane en (Ci-Cio) notamment le 1,4-dichloro butane, et
- un calixarène de formule I : 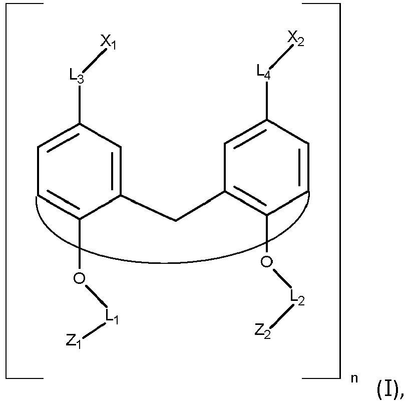 dans laquelle :
   - X₁ et X₂ représentent chacun indépendamment l'un de l'autre H ou un groupe 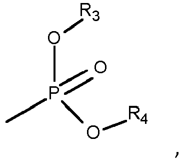 dans lequel R₃ et R₄ représentent chacun, indépendamment l'un de l'autre, H ou un groupe alkyle en (C₁-C₈), à condition que X₁ et X₂ ne représentent pas simultanément H,
   - L₁, L₂, L₃ et L₄ sont des groupements espaceurs, choisis indépendamment les uns des autres, dans le groupe consistant en un cycloalkylènyle en (C₃-C₁₀), O, NH, -(CH₂)_{q}-, q étant un nombre entier de 1 à 12,
   - Z₁ et Z₂ représentent chacun, indépendamment l'un de l'autre, un groupement fonctionnel choisi parmi une amine éventuellement protégée, F, Cl, Br, I, OH, C(=O)H, C(=O)Hal, un groupe aryle ou un groupe aryle substitué, tel qu'un tosyle, un groupement diazonium, un hétérocycle aromatique tel qu'un groupe pyrrolyle, furyle, thiényle, ou pyridinyle, un groupe sulfate ou sulfonate éventuellement protégé,
   - n est un nombre entier de 1 à 10 ; ou un calixarène de formule II 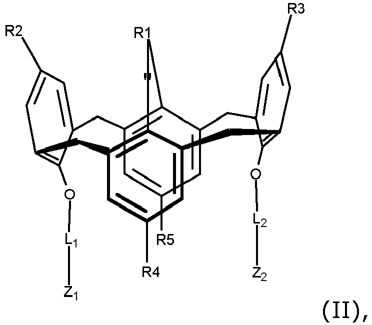 dans laquelle :
      - R1 est choisi parmi -X(C₂H₄X)ₘ-, ou-X(C₂H₄X)_{p/2}YX(C₂H₄)_{p/2}-, X étant choisi indépendamment parmi O et/ou N, m étant égale à 3, 4, 5 ou 6, p étant égale à 2 ou 4, Y étant un cycloalkylène en (C₃-C₁₀) ou un arylène en (C₆-C₁₀) ; et
      - R₂ à R₅ sont choisis indépendamment l'un de l'autre parmi H, ou un alkyle (C₁-C₆) ;
      - L₁ et L₂ sont des groupements espaceurs, choisis indépendamment les uns des autres, parmi un cycloalkylène en (C₃-C₁₀) ou un arylène en (C₃-C₁₀), - (CH₂)_{q}-, q étant un nombre entier de 1 à 12 ;
      - Z₁, Z₂ sont des groupements de greffage, choisis indépendamment les uns des autres, parmi F, Cl, Br, I, -OHNH₂, -C(=O)OH, -C(=O)Hal, un groupe aryle ou un groupe aryle substitué, tel qu'un tosyle, un groupement diazonium, un hétérocycle aromatique tel qu'un groupe pyrrolyle, furyle, thiényle, ou pyridinyle, un groupe sulfate ou sulfonate éventuellement protégé
   - un polyol en (C₂-C₁₀) contenant de 2 à 4 groupes hydroxyle, notamment un alcane diol en (C₂-C₁₀).

Dans les calixarènes de formule I ou II, l'ensemble L1-Z1 et L2-Z2 constitue des bras de réticulation.

Dans un mode particulier de l'invention, lorsque le polymère initial est l'acide polyacrylique ou ses copolymères, ledit agent réticulant est de préférence une diamine, un polyéthylène glycol ou un polyhydroxyéthyl méthacrylate.

Lors de la stabilisation des fibres, la diamine forme des liaisons amides (-CO-NH-) inter-chaînes avec l'acide polyacrylique ou ses dérivés anioniques. Un polyéthylène glycol ou un polyhydroxyéthyl méthacrylate comme agent réticulant forme avec les polymères initiaux hydrophiles des liaisons inter-chaines de type ester.

Conformément à l'invention, la diamine est la hexaméthylènediamine. L'alcane diol peut être le 1,6-hexanediol.

Dans un autre mode particulier, lorsque le polymère initial est la poly(4-vinylpyridine) ou ses dérivés, ledit agent réticulant est de préférence un dibromoalcane en (C₁-C₁₀) ou un diiodoalcane en (C₁-C₁₀), notamment le 1,4-dibromobutane ou le 1,4- diiodobutane.

Dans une solution de synthèse, le polyvinylpyrrolidone, ses dérivés et ses copolymères peuvent être utilisés à la fois comme un polymère initial hydrophile et hydrosoluble et comme un agent réticulant.

Lorsque l'agent réticulant est une diamine, sa quantité est de préférence de 5 à 20%, plus particulièrement de 15 à 20%, en particulier de 15% ou de 20%, en poids relativement au poids de polymère initial hydrophile et hydrosoluble dans la solution de synthèse.

Dans un mode de réalisation de l'invention, la susdite solution de synthèse contenant un polymère initial hydrophile et hydrosoluble comprend en outre un calixarène de formule I ou de formule II tel que défini auparavant comme agent réticulant.

Dans un calixarène de formule I ou II, les radicaux Z₁ et Z₂ permettent de mettre en œuvre la réticulation avec les chaînes de polymère initial hydrophile et hydrosoluble.

Conformément à l'invention, ces calixarènes sont notamment ceux décrits dans la demande FR 14/52958 et ceux décrits dans la demande internationale WO 2013/124831.

De préférence, ledit calixarène est choisi parmi les composés A et/ou B ci-après:

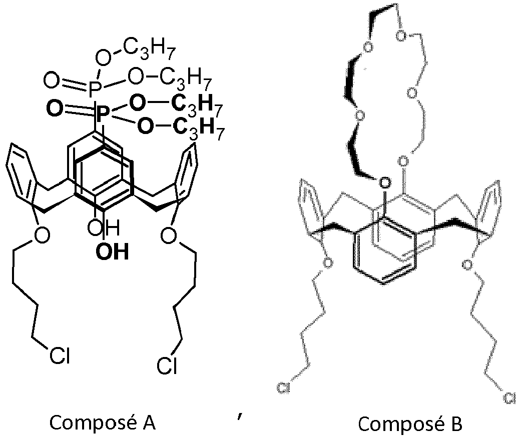

En plus de leur rôle structurel lorsqu'ils sont utilisés en tant qu'agent réticulant, les calixarènes confèrent aux fibres de l'invention une sélectivité vis-à-vis de certaines terres rares, ou de certains radionucléides comme le césium.

Dans un mode particulier et en raison de leur hydrophobicité, les calixarènes non réticulant peuvent également être incorporés de façon stable dans les fibres insolubles de l'invention sans qu'il soit nécessaire de les réticuler avec cette matrice. Si le calixarène est suffisamment hydrophobe, il est incorporé et immobilisé dans les fibres, par rétention hydrophobe via un processus d'imprégnation par solvant, et le calixarène ainsi retenu ne peut pas être extrait par le milieu aqueux dans lequel il n'est pas soluble. Le calixarène est typiquement immobilisé dans les fibres par des interactions Pi-Pi et/ou des liaisons Van der waals. Les fibres stabilisées restant perméables à l'eau, elles permettent alors de mettre en contact la phase aqueuse avec le calixarène d'intérêt.

L'incorporation des calixarènes dans les fibres insolubles de l'invention peut se faire au moment de la synthèse des fibres en ajoutant le calixarène d'intérêt dans la solution de synthèse. De cette façon les calixarènes se répartissent de façon homogène dans les fibres produites par filage à sec ou filage au mouillé.

L'incorporation peut aussi se faire après la synthèse et la stabilisation des fibres, à l'aide d'un solvant à la fois capable de dissoudre les calixarènes et pouvant gonfler aisément les fibres sans les dissoudre. Un tel solvant peut être choisi parmi les alcools, le tétrahydrofurane (THF) ou le diméthylformamide (DMF) pour incorporer les calixarènes dans l'acide polyacrylique ou la poly(4-vinylpyridine). Ce mode d'incorporation de calixarènes peut être mis en œuvre par la méthode suivante :
- imprégner les fibres issues de la stabilisation par immersion dans une solution contenant un solvant convenable tel que décrit ci-dessus et les calixarènes hydrophobes,
- récupérer les fibres ainsi imprégnées et
- éliminer le solvant par séchage à sec ou par lavage avec un 2^{ème} solvant répondant aux critères suivants : il est miscible avec le solvant initialement contenant des calixarènes hydrophobes ; il ne dissout pas ni imprègne les fibres.

Dans ce cas de figures, il n'est pas nécessaire que ces calixarènes comportent des groupes fonctionnels, tels que les groupes Z₁, Z₂ pour les calixarènes de formule I ou II, qui leur permettent de réticuler avec un polymère.

Ces calixarènes sont bien connus de l'homme du métier.

A titre d'exemple de calixarènes non réticulants hydrophobes qui peuvent être incorporés dans les fibres de l'invention, nous pouvons citer :

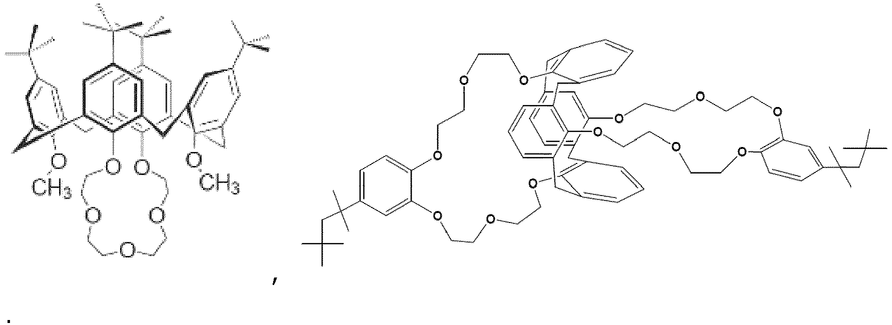

### • Solution de synthèse

On entend par « solution de synthèse » une solution liquide aqueuse ou organique comprenant un ou un mélange de solvant.

Ladite solution peut être une solution aqueuse comprenant un autre solvant organique miscible à l'eau, tel que l'éthanol, le propanol, l'isopropanol, le tétrahydrofurane (THF), ou un mélange de ceux-ci. La présence d'un solvant organique peut être utile pour préparer des fibres à matrice mixte dans laquelle certaines molécules sont solubles dans un solvant organique et non dans l'eau.

Par exemple, on privilégiera une solution aqueuse pour solubiliser un agent réticulant aminé tel qu'une diamine, plutôt qu'une solution de synthèse organique car cette dernière favorise la formation de paires ioniques liées entre les amines et les acides, ce qui limite la solubilité du polymère et conduit à sa précipitation. Si toutefois, on est amené à travailler en milieu organique en présence d'un agent réticulant aminé, le milieu est acidifié (pH<4) pour éviter la précipitation du polymère.

Une solution de synthèse organique, notamment une solution alcoolique, peut être utilisée pour solubiliser les calixarènes qui n'ont qu'une faible solubilité dans l'eau. On entend par « solution alcoolique » l'éthanol pur utilisé en tant que solvant.

Dans un mode de réalisation, pour préparer les fibres de l'invention dans lesquelles les calixarènes sont réticulés directement avec l'acide polyacrylique, la solution de synthèse est un mélange d'une solution alcoolique dans laquelle est dissous l'acide polyacrylique et du THF dans lequel sont dissous des calixarènes. L'éthanol et le THF sont miscibles.

Dans un autre mode de réalisation, pour préparer les fibres de l'invention contenant les calixarènes dans lesquelles l'acide polyacrylique est réticulé à l'aide de l'agent réticulant HMDA, la solution de synthèse est une solution alcoolique acidifiée, notamment à pH2, afin d'éviter la précipitation des calixarènes.

Dans un mode de réalisation avantageux, la susdite solution aqueuse est une solution eau/éthanol.

Dans un mode de réalisation avantageux, les solvants dans ladite solution de synthèse sont l'éthanol et le THF.

### • Filage à sec

Le filage à sec est une technologie d'extrusion de polymère dissous dans un solvant. Le polymère dissous est extrudé à travers une filière qui est une plaque percée de nombreux trous de diamètres ajustables. Les fibres formées au travers de la filière et encore imprégnées de solvant, qui est le solvant contenu dans la solution de synthèse, sont séchées dans un air chaud dans un compartiment d'évaporation. Selon la nature du solvant, ce dernier sera éliminé, par exemple lorsqu'il s'agit de l'eau, ou condensé dans un second compartiment pour être recyclé s'il s'agit d'un solvant toxique et/ou ayant un coût important.

Le filage à sec d'une solution de polymère selon la susdite étape (a) peut être mise en œuvre à l'aide d'un dispositif industriel disponible à ce jour pour ce procédé.

La productivité d'un tel dispositif industriel à ce jour est environ 100 kg de fibres par jour, largement supérieure à d'autre technique de filage de polymère en solution.

### • Filage au mouillé

La technologie de filage au mouillé est différente de celle du filage à sec par le mode d'élimination du solvant présent dans la solution de synthèse.

Après le passage de la solution de synthèse au travers d'une filière qui est une plaque percée de nombreux trous, l'élimination du solvant initialement présent dans la solution de synthèse (premier solvant) et imprégné dans les fibres obtenues est assurée par un deuxième solvant dans lequel les fibres vont être immergées. Ledit 2^{ème} solvant doit correspondre aux critères suivants :
- Il est miscible avec le solvant initialement présent dans la solution de synthèse ;
- Il ne dissout pas, ni n'imprègne les fibres.

De cette façon, le premier solvant est extrait par lavage des fibres. En sortie de bain du 2^{ème} solvant, les fibres subissent un séchage final.

Comme la technique de filage à sec, la productivité d'un dispositif industriel disponible à ce jour pour filage au mouillé est également environ 100 kg de fibres par jour.

Les termes « filage au mouillé » et « filage à l'humide » sont interchangeables.

Le choix entre le procédé de filage à sec ou au mouillé sera dépendant du choix du ou des solvants de la solution de synthèse à filer. Lorsque la température d'évaporation du solvant est inférieure à 100°C, il est plus avantageux d'utiliser le filage à sec, alors que quand la température d'évaporation du solvant dépasse 100°C, il est plus avantageux d'utiliser le filage au mouillé.

### • Stabilisation des fibres

Le processus de réticulation permet de stabiliser les fibres issues du procédé de filage à sec ou de filage au mouillé et de les rendre insolubles dans un effluent essentiellement aqueux.

Conformément à l'invention, la stabilisation des fibres obtenues par filage à sec ou filage au mouillé est mise en œuvre notamment par un traitement thermique.

### > Traitement thermique

En règle générale, la température et la durée choisies dans le cadre de la présente invention pour un traitement thermique doivent permettre de conserver l'intégrité des fibres et d'éviter la fusion des fibres au cours de ce traitement.

Le traitement thermique est effectué à une température de 20°C à 220°C, notamment de 20°C à 180°C, particulièrement à une température de 60°C à 160°C, plus particulièrement à une température de 120°C à 150°C.

La durée du traitement thermique dépend de la température appliquée lors de ce traitement. Typiquement, lorsque ce traitement est réalisé à 145°C, la durée de traitement est d'environ 30 à 60 minutes. Il peut atteindre plusieurs heures (typiquement de 5 à 10 heures) si les températures appliquées sont de l'ordre de 80°C à 120°C.

Lorsque la stabilisation est mise en œuvre par un traitement thermique, la solution de polymère contient, de préférence, un agent réticulant.

A titre d'exemple, un traitement thermique entre 120°C et 160°C entraine au sein de l'acide polyacrylique la formation d'anhydrides par déshydratation, permettant une réaction chimique avec un agent réticulant aminé, tel que le HMDA par exemple. De la même façon, lorsque la solution de synthèse comprend un calixarène portant des bras de réticulation présentant des fonctions amine, un traitement thermique à 140°C est favorable pour la stabilisation des fibres via la formation des anhydrides.

Un traitement thermique supérieur à 180°C peut entrainer la fusion des fibres.

Dans un mode de réalisation particulier, les fibres de l'invention sont susceptibles d'être obtenues par le procédé comprenant les étapes suivantes :
(a) l'obtention des fibres par filage à sec ou filage au mouillé à partir d'une solution de synthèse, ladite solution comprenant un agent réticulant et un polymère initial hydrophile et hydrosoluble tel que décrit auparavant ayant une masse moléculaire de 1x10⁴ à 1,5x10⁶, notamment de 1×10⁴ à 5×10^{5,}
(b) la stabilisation des fibres obtenues dans l'étape (a) par un traitement thermique pour obtenir des fibres insolubles, mais gonflables dans un effluent essentiellement aqueux.

Dans un mode de réalisation avantageux, les fibres insolubles de l'invention sont obtenues par traitement thermique des fibres, produites par filage à sec ou filage au mouillé à partir d'une solution aqueuse comprenant de l'acide polyacrylique comme polymère initial et une diamine comme agent réticulant.

Plus avantageusement, les fibres de l'invention sont susceptibles d'être obtenues par le procédé comprenant les étapes suivantes :
(a) l'obtention des fibres par filage à sec ou filage au mouillé à partir d'une solution de synthèse, ladite solution comprenant 0,2-4% en poids de la solution de synthèse d'hexaméthylènediamine comme agent réticulant et 20-25% en poids de la solution de synthèse d'acide polyacrylique ayant une masse moléculaire de 1,3×10⁵- 2,5×10⁵ comme polymère initial,
(b) la stabilisation des fibres obtenues dans l'étape (a) par un traitement thermique, lesdites fibres insolubles mais gonflables dans un effluent essentiellement aqueux ayant un taux de réticulation compris entre 5 et 20%.

Dans un mode de réalisation particulièrement avantageux, l'invention concerne les fibres insolubles dans un effluent essentiellement aqueux, obtenues par traitement thermiques des fibres produites par filage à sec ou filage au mouillé à partir d'une solution de synthèse alcoolique acidifiée à pH=2 et comprenant :
- l'acide polyacrylique ayant une masse moléculaire de 1×10⁴ à 5x10⁵, notamment de 1,3x10⁵ à 2,5×10⁵, comme polymère initial, et
- l'hexaméthylènediamine comme agent réticulant.

Dans un autre mode de réalisation particulièrement avantageux, l'invention concerne les fibres insolubles dans un effluent essentiellement aqueux, obtenues par traitement thermique des fibres produites par filage à sec ou filage au mouillé à partir d'une solution de synthèse à base de différents solvants organiques miscibles tels que Ethanol/THF, acidifiée à pH2 et comprenant :
- l'acide polyacrylique ayant une masse moléculaire de 1x10⁴ à 5x10⁵, notamment de 1,3x10⁵ à 2,5×10⁵, comme polymère initial, et
- l'hexaméthylènediamine comme agent réticulant.
- un calixarène.

Un autre mode de réalisation avantageux de l'invention concerne les fibres insolubles dans un effluent essentiellement aqueux, obtenues par traitement thermique des fibres produites par filage à sec ou filage au mouillé à partir d'une solution de synthèse aqueuse ou alcoolique comprenant :
- l'acide polyacrylique ayant une masse moléculaire de 1×10⁴ à 5×10⁵, notamment de 1,3×10⁵ à 2,5×10⁵, comme polymère initial, et
- un polyéthylène glycol ayant une masse moléculaire de 950 à 1050 ou un polyhydroxyéthyl méthacrylate ayant une masse moléculaire de 20 000 comme agent réticulant.

Dans un autre mode de réalisation avantageux, les fibres insolubles de l'invention sont obtenues par traitement thermique des fibres, produites par filage à sec ou filage au mouillé à partir d'une solution aqueuse comprenant de l'acide polyacrylique comme polymère initial et un polyol en (C₂-C₁₀) contenant de 2 à 4 groupes hydroxyle, notamment un alcane diol en (C₂-C₁₀), comme agent réticulant.

Dans un mode de réalisation plus avantageux, les fibres insolubles de l'invention sont obtenues par traitement thermique des fibres, produites par filage à sec ou filage au mouillé à partir d'une solution aqueuse comprenant de l'acide polyacrylique comme polymère initial et le 1,6-hexanediol comme agent réticulant.

Dans un mode de réalisation particulièrement avantageux, l'invention concerne les fibres insolubles dans un effluent essentiellement aqueux, obtenues par traitement thermiques des fibres produites par filage à sec ou filage au mouillé à partir d'une solution de synthèse alcoolique acidifiée à pH=2 et comprenant :
- l'acide polyacrylique ayant une masse moléculaire de 1×10⁴ à 5x10⁵, notamment de 1,3x10⁵ à 2,5×10⁵, comme polymère initial, et
- le 1,6-hexanediol comme agent réticulant.

Un autre mode de réalisation avantageux de l'invention concerne les fibres insolubles dans un effluent essentiellement aqueux, obtenues par traitement thermique des fibres, produites par filage à sec ou filage au mouillé à partir d'une solution de synthèse alcoolique comprenant :
- de la poly(4-vinylpyridine) ayant une masse moléculaire de 1x10⁴ à 5×10⁵ comme polymère initial, et
- du 1,4-dibromobutane ou du 1,4- diiodobutane comme agent réticulant.

Un autre mode de réalisation plus particulier concerne les fibres insolubles de l'invention, susceptibles d'être obtenues par le procédé comprenant les étapes suivantes :
(a) l'obtention des fibres par filage à sec ou filage au mouillé à partir d'une solution de synthèse alcoolique comprenant :
   - le polyvinylpyrrolidone avec une masse moléculaire de 1,0×0⁶ comme polymère initial, et éventuellement
   - une molécule cage de 5-30% en poids de polymère initial hydrophile et hydrosoluble,
(b) la stabilisation des fibres obtenues dans l'étape (a) par traitement thermique.

A titre d'exemple, le teneur de polyvinylpyrrolidone dans la solution de synthèse peut être 15% en poids de la solution de synthèse.

Le traitement thermique de ces fibres peut être effectué à 215°C pendant 2 heures.

Un autre mode de réalisation plus particulier concerne les fibres insolubles hors du cadre de l'invention, susceptibles d'être obtenues par le procédé comprenant les étapes suivantes :
(a) l'obtention des fibres par filage à sec ou filage au mouillé à partir d'une solution de synthèse alcoolique comprenant :
   - 15% en poids de la solution de synthèse de polyvinylpyrrolidone avec une masse moléculaire de 1,0×0⁶,
   - 5% en poids de la solution de synthèse de polystyrène sulfonate avec une masse moléculaire de 75000,
(b) la stabilisation des fibres obtenues dans l'étape (a) par traitement thermique.

Le traitement thermique de ces fibres peut être effectué à 215°C pendant 2 heures.

Un autre mode de réalisation plus particulier concerne les fibres insolubles de l'invention, susceptibles d'être obtenues par le procédé comprenant les étapes suivantes :
(a) l'obtention des fibres par filage à sec ou filage au mouillé à partir d'une solution de synthèse alcoolique comprenant :
   - 15% en poids de la solution de synthèse de poly-4-vinylpyridine (P4VP) avec une masse moléculaire de 160000,
   - 0,65% en poids de la solution de synthèse de dibromo-p-xylène ou 5-10 % en poids de la solution de synthèse de 1-4 dichlorobutane comme agent réticulant,
(b) la stabilisation des fibres obtenues dans l'étape (a) par traitement thermique.

Le traitement thermique de ces fibres peut être effectué à 150°C pendant 1 heure.

Un autre mode de réalisation plus particulier concerne les fibres insolubles de l'invention, susceptibles d'être obtenues par le procédé comprenant les étapes suivantes :
(a) l'obtention des fibres par filage à sec ou filage au mouillé à partir d'une solution de synthèse aqueuse comprenant :
   - 25% en poids de la solution de synthèse d'acide polyacrylique avec une masse moléculaire de 2,5×10⁵,
   - 2,5% en poids de la solution de synthèse de poly(styrène sulfonate-co-acide maléique) avec une masse moléculaire de 2,0×10^{5,}
   - 17% en poids de la solution de synthèse d'hexaméthylènediamine comme agent réticulant
(b) la stabilisation des fibres obtenues dans l'étape (a) par traitement thermique.

Le traitement thermique de ces fibres peut être effectué à 160°C pendant 2 heures.

Un autre mode de réalisation plus particulier concerne les fibres insolubles hors du cadre de l'invention susceptibles d'être obtenues par le procédé comprenant les étapes suivantes :
(a) l'obtention des fibres par filage à sec ou filage au mouillé à partir d'une solution de synthèse aqueuse contenant 10% en poids de poly[(2-éthyldiméthylammonioéthyl méthacrylate éthyle sulfate)-co-(1-vinylpyrrolidone)] avec une masse moléculaire de 10⁶,
(b) la stabilisation des fibres obtenues dans l'étape (a) par traitement thermique.

Le traitement thermique de ces fibres peut être effectué à 200°C pendant 2 heures.

La présente invention a aussi pour objet un procédé de préparation des fibres telles que décrites ci-dessus, ledit procédé comprenant les étapes suivantes :
(a) l'obtention des fibres par filage à sec ou filage au mouillé à partir d'une solution de synthèse, ladite solution de synthèse comprenant :
   (i) au moins un polymère initial hydrophile et hydrosoluble choisi dans le groupe comprenant :
      - l'acide polyacrylique, le polyacrylate de sodium, ou les copolymères de l'acide polyacrylique,
      - les dérivés anioniques du polystyrène, tels que le polystyrène sulfonate ou les copolymères du polystyrène sulfonate,
      - les dérivés cationiques de polystyrène, tels que le polystyrène trialkylbenzyl ammonium
      - la poly(4-vinylpyridine) ou ses dérivés,
      - l'alcool polyvinylique ou ses dérivés hydrophiles,
      - la polyvinylpyrrolidone, ses dérivés, ou ses copolymères, ou
      - un mélange de ceux-ci,
      ledit polymère initial hydrophile et hydrosoluble ayant une masse moléculaire de 1x10⁴ à 1,5x10⁶, notamment de 1x10⁴ à 5x10⁵, la teneur en polymère initial hydrophile et hydrosoluble dans la solution de synthèse étant de 5 à 50 %, de préférence de 10 à 30 %, en poids de la solution de synthèse,
   (ii) au moins un additif choisi parmi :
      - un agent réticulant de 0,05 à 40 %, notamment de 1 à 40%, particulièrement de 5 à 20%, plus particulièrement de 15 à 20%, notamment de 15% ou de 20%, en poids de polymère initial hydrophile et hydrosoluble,
      - une molécule complexante de 1- 40%, notamment de 1 à 30% en poids de polymère initial hydrophile et hydrosoluble, ladite molécule complexante étant choisie parmi : un calixarène, un éther couronne, ou
      - un mélange de ceux-ci ;
(b) la stabilisation par traitement thermique des fibres obtenues dans l'étape précédente pour obtenir des fibres insolubles mais gonflables dans un effluent essentiellement aqueux.

Dans un mode de réalisation particulier, lorsque le polymère initial est le polyacrylate de sodium, le procédé comprend en outre, après l'obtention des fibres par filage à sec ou filage au mouillé (étape (a)) et avant la stabilisation par traitement thermique (étape (b)), une étape (a') consistant en :
(a') le trempage des fibres obtenues dans l'étape (a) dans une solution acidifiée à pH entre 0 et 1,

Ce traitement permet de transformer la forme sodée (COO-Na⁺) des fibres en la forme acide (COOH).

Une solution acidifiée utilisée dans l'étape (a') est une solution qui permet de gonfler les fibres et en extraire le sodium, sans dissoudre les fibres de l'invention. Par exemple, ladite solution acidifiée peut être le diméthylsulfoxyde (DMSO) ou le tétrahydrofurane (THF) contenant de 1 à 5 %, notamment de 2%, d'acide chlorhydrique en poids total de la solution.

Ladite solution acidifiée peut être aussi une solution aqueuse contenant au moins 1 M d'acide.

Un autre aspect de la présente invention concerne un matériau constitué par des fibres insolubles mais gonflables dans un solvant essentiellement aqueux telles que décrites auparavant.

Ledit matériau est notamment constitué par un même type de fibres insolubles mais gonflables de l'invention.

Les matériaux de l'invention peuvent être des matériaux non tissés de fibres polymères, ou des matériaux sous forme de feutre de polymère ou sous forme de feutrine de polymère.

Dans un autre mode de réalisation particulier, l'invention concerne un matériau constitué par des fibres à base d'acide polyacrylique produites par filage à sec ou filage au mouillé et stabilisées par traitement thermique à l'aide de l'hexaméthylènediamine comme agent réticulant, telles que décrites auparavant.

Dans un autre mode de réalisation particulier, l'invention concerne un matériau constitué par des fibres à base d'acide polyacrylique produites par filage à sec ou filage au mouillé et stabilisées par traitement thermique à l'aide d'1,6-hexanediol comme agent réticulant, telles que décrites auparavant.

Un avantage principal des fibres insolubles dans un effluent essentiellement aqueux de l'invention est leur capacité à capturer les métaux lourds, les terres rares ou les éléments radioactifs, grâce à leur surface spécifique très importante et éventuellement à la présence de molécules complexant.

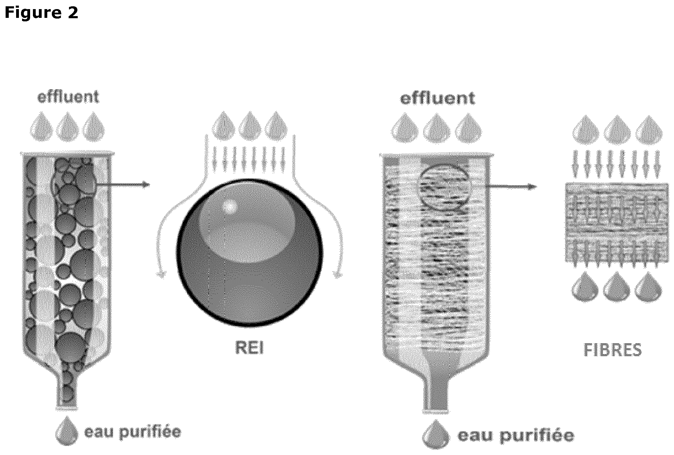

Lorsque les fibres sont fabriquées sous forme d'un matériau, sa surface spécifique exposée peut être supérieure à 10m²/g, plus importante que celle des résines échangeuses d'ions (figure 2).

Ces fibres sont donc plus performantes que les résines et capables de traiter des effluents industriels.

L'invention aussi concerne l'utilisation des fibres insolubles mais gonflables dans un effluent essentiellement aqueux telles que décrites auparavant, pour traiter un effluent contenant des métaux, notamment les sels métalliques issus des métaux lourds, des terres rares, des métaux alcalins, alcalino-terreux, ou des actinides, dans leurs formes isotopiques stables ou instables.

Les métaux ciblés par la présente invention comprennent notamment le cuivre (Cu), le césium (Cs), le mercure (Hg), le chrome (Cr), le plomb (Pb), le zinc (Zn), l'uranium (U) et le plutonium (Pu).

Le terme « terres rares » se réfère à un groupe d'éléments chimiques constitué par le scandium (Sc), l'yttrium (Y), et les quinze lanthanides, à savoir le lanthane (La), le cérium (Ce), le praséodyme (Pr), le néodyme (Nd), le prométhium (Pm), le samarium (Sm), l'europium (Eu), le gadolinium (Gd), le terbium (Tb), le dysprosium (Dy), l'holmium (Ho), l'erbium (Er), le thulium (Tm), l'ytterbium (Yb) et le lutécium (Lu).

Le terme « actinide » se réfère à un groupe d'éléments chimiques constitué par le lawrencium (Lr), l'actinium (Ac), le thorium (Th), le protactinium (Pa), l'uranium (U), le neptunium (Np), le plutonium (Pu), l'américium (Am), le curium (Cm), le berkélium (Bk), le californium (Cf), l'einsteinium (Es), le fermium (Fm), le mendélévium (Md), le nobélium (No).

Le terme « élément radioactif » se réfère aux éléments chimiques radioactifs naturels ou produits de fission. Il peut s'agir de l'ensemble des métaux de la classification périodique qu'ils soient par exemple monovalent comme le césium, divalent comme le strontium ou trivalent comme les lanthanides.

Un mode de réalisation particulier de l'invention concerne l'utilisation des fibres insolubles de l'invention obtenues à partir d'une solution aqueuse d'acide polyacrylique ou de co-polymères pour traiter un effluent contenant le cuivre, notamment sous forme cationique Cu²⁺.

A titre d'exemple, les fibres insolubles de l'invention obtenues à partir d'une solution aqueuse d'acide polyacrylique peuvent capturer le cuivre jusqu'à 280 mg/g. Cette capacité est de 50% supérieure aux meilleures résines connues dans l'art antérieur à base d'acide polyacrylique.

Un autre mode de réalisation particulier de l'invention concerne l'utilisation des fibres insolubles de l'invention obtenues à partir d'une solution de synthèse organique comprenant :
- l'acide polyacrylique ou ses dérivés anioniques, et
- un calixarène de formule I ou formule II ou un calixarène non réticulant tel que défini auparavant, pour traiter un effluent contenant du césium.

Avantageusement, les solvants dans ladite solution de synthèse sont l'éthanol et le THF.

Plus particulièrement, l'invention concerne l'utilisation de fibres insolubles obtenues à partir d'une solution de synthèse comprenant de l'acide polyacrylique et le calixarène (composé B) pour traiter un effluent contenant le césium.

Ledit calixarène peut être soit réticulé avec l'acide polyacrylique, soit simplement immobilisé, grâce à son hydrophobicité, dans la matrice de polymère.

Un autre mode de réalisation particulier de l'invention concerne l'utilisation des fibres insolubles de l'invention obtenues à partir d'une solution de synthèse aqueuse comprenant les dérivés cationiques de polystyrène pour traiter un effluent contenant de l'uranium, notamment sous forme anionique UO²⁻.

L'invention a également pour objet la mise à disposition d'un procédé d'extraction dans un effluent des métaux, notamment les sels métalliques issus des métaux lourds, des terres rares, des métaux alcalins, des alcalino-terreux, ou des actinides, dans leurs formes isotopiques stables ou instables, ledit procédé comprenant les étapes suivantes :
(i) placer des fibres insolubles mais gonflables de l'invention, dans un effluent essentiellement aqueux telles que décrites auparavant pendant un temps suffisant ;
(ii) récupérer les métaux, notamment les sels métalliques issues des métaux lourds, des terres rares, des métaux alcalins, des alcalino-terreux, ou des actinides, dans leurs formes isotopiques stables ou instables complexés par desdites fibres en plaçant desdites fibres dans une solution de régénération.

Les fibres utilisées dans un tel procédé d'extraction peuvent être des matériaux non tissés ou des feutres ou feutrines.

Un autre avantage des fibres de la présente invention est que la régénération des fibres peut être mise en œuvre facilement et rapidement.

La régénération des fibres rend possible la récupération des métaux ou éléments capturés par les fibres.

La régénération des fibres et la récupération des métaux ou éléments capturés peut être réalisée par toute technique connue de l'homme du métier, notamment par changement de pH de la solution de régénération par rapport à celui de l'effluent.

Dans un mode de réalisation particulier, ladite solution de régénération est une solution acide.

Les groupes carboxylates (-COO⁻) de l'acide polyacrylique (PAA) et les groupes pyridine sous forme neutre de la poly(4-vinylpyridine)(P4VP) sont les groupes fonctionnels pour complexer le cuivre. En revanche, les groupes carboxyliques (-COOH) de l'acide polyacrylique et les groupes pyridines acidifiés de la P4VP ne sont pas capables de complexer le cuivre.

En diminuant le pH de la solution de régénération, ces groupes fonctionnels passent respectivement aux formes non-fonctionnelles, ce qui permet la libération des métaux ou éléments complexés par ces groupes fonctionnels.

Lorsque ce sont des ions Cu²⁺ qui sont complexés avec ces groupes fonctionnels, après mise en contact avec un effluent contenant ces ions, ils peuvent être récupérés des fibres insolubles par application d'une solution de régénération acide.

L'invention concerne en particulier un procédé d'extraction du césium contenu dans un effluent, comprenant les étapes suivantes :
(i) placer des fibres insolubles de l'invention, éventuellement sous forme de matériau non tissé ou de feutre ou de feutrine, obtenues à partir d'une solution de synthèse organique contenant de l'acide polyacrylique et le calixarène composé B, telles que décrites auparavant, dans un effluent pendant un temps suffisant ;
(ii) récupérer le césium complexé par desdits fibres en plaçant desdits fibres dans une solution de régénération acide.

Avantageusement, la régénération dudit matériau non tissé ou dudit feutre ou de ladite feutrine a eu lieu dans une solution de régénération de pH1.

La présente invention est illustrée davantage par les figures et les exemples ci-après.
Figure la : Représentation d'un dispositif pour filage à sec.

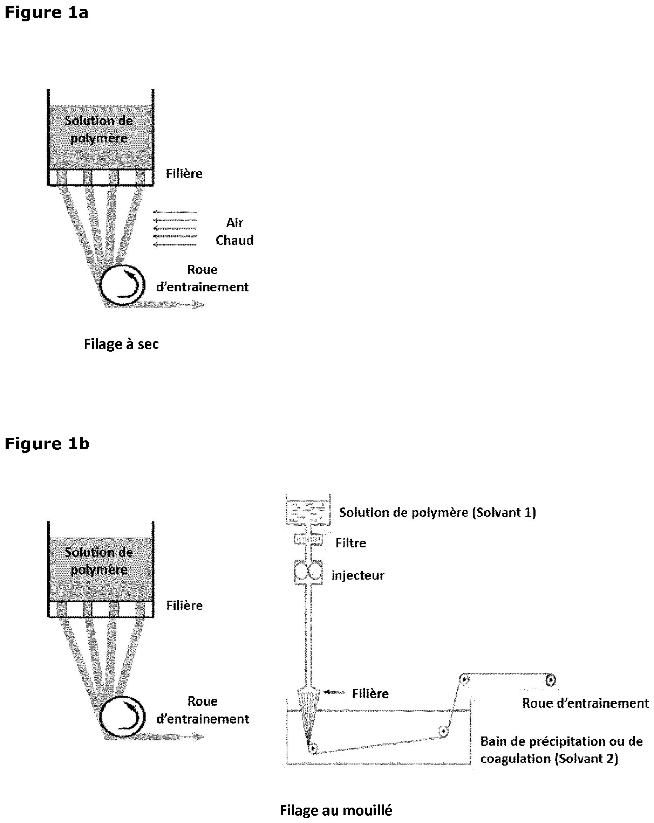

Figure 1b : Représentation d'un dispositif pour filage au mouillé.

Figure 2 : Vision schématique du traitement d'effluents avec des résines échangeuses d'ions ou des fibres.

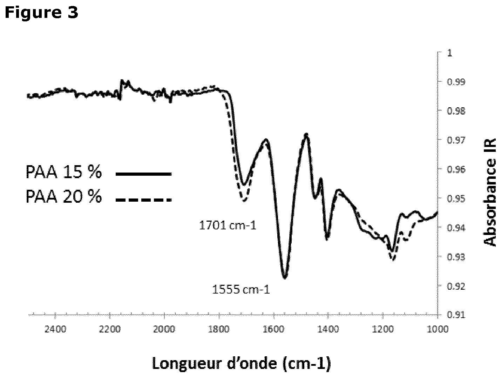

Figure 3 : Spectre IR des fibres avec un faible taux de réticulation (traits pleins) et des fibres avec un taux de réticulation augmenté (traits pointillés).

Les taux de réticulation sont évalués par le rapport des surfaces des bandes à 1707 et 1555 cm⁻¹ divisé par deux pour tenir compte que l'agent réticulant est di-fonctionnel et pour exprimer ce rapport en poids. La bande à 1707 cm⁻¹ correspond à la forme ester réalisée par la réaction de couplage entre les groupements acides du polymère et les groupements alcool du réticulant (Hexanediol). La bande à 1555 cm⁻¹ correspond à la forme carboxylate du polymère. Ces bandes ont des coefficients d'extinction molaire très proche. Si le polymère est modifié dans sa forme acide il n'est plus possible de visualiser la fraction de bande ester associée à la réticulation.

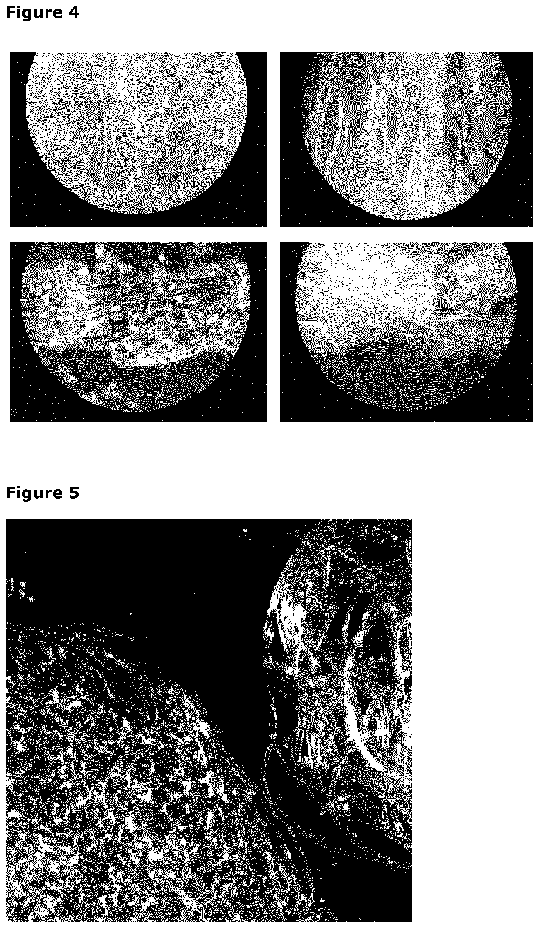

Figure 4 : images obtenues par microscope binoculaire de fibres de PAA réticulées avec 15% d'héxanediol (colonne de gauche) ou avec 20 % (colonne de droite). Les images en haut illustrent les fibres initiales avant le contact avec de l'eau. Les images en bas montrent les fibres après immersion dans l'eau. Avant immersion dans l'eau (rangée du haut) les fibres ont typiquement un diamètre de 30 µm.

Figure 5 : Image obtenue par microscope binoculaire comparant le gonflement des fibres réticulées avec 15% d'héxanediol et celui des fibres réticulées avec 20% d'héxanediol.

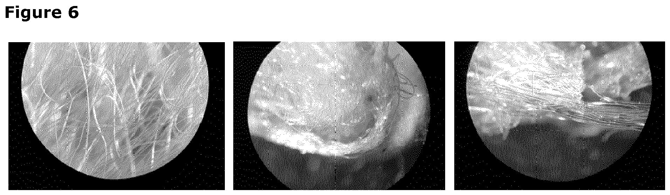

Figure 6 : Images obtenues par microscope binoculaire.

Image à gauche : fibres initiales de 40 µm de diamètre (diamètre initiale avant immersion dans l'eau). Ces fibres comportent 20% d'agent réticulant en poids.

Image à droite : fibres ayant été réticulées uniquement par un agent réticulant à 20 % en poids et après 30 minutes d'immersion dans l'eau.

Image au centre : fibres ayant été réticulées par un agent réticulant à 20 % en poids puis réticulées une seconde fois par 1 h de traitement thermique et après 30 minutes d'immersion dans l'eau.

### Exemples

### Matériels et méthodes

### • Filage à sec

Le procédé du filage à sec commence par la préparation d'une solution de synthèse contenant un polymère et un solvant, pour que la proportion en poids entre le polymère et le solvant soit environ 1 : 3. La solution obtenue doit être fluide et homogène. Ladite solution est ensuite passée sous pression à travers une plaque percée de nombreux trous de diamètre identique. Le nombre de trous peut être par exemple 100, 200 ou 500. Le diamètre de ces trous peut être entre 20 µm et 100 µm. Ces trous sont séparés de manière suffisante pour que les fibres obtenues à l'issue de cette plaque ne soient pas collées entre elles.

Les fibres obtenues à l'issue de la plaque sont chauffées au point d'évaporation du solvant pour éliminer ledit solvant.

Après ce traitement, les fibres sont récupérées dans un récipient. La vitesse de production du filage à sec est typiquement de 10 à 100 m/s.

### • Filage au mouillé

Le procédé du filage au mouillé est identique au procédé du filage à sec jusqu'à l'obtention sous pression des fibres à l'issue d'une plaque munie de nombreux trous.

Les fibres ainsi obtenues, contenant encore le solvant de la solution de synthèse qui est généralement lourd et peu volatil, sont immergées dans un deuxième solvant plus léger et volatil qui est d'une part miscible avec le solvant de la solution de synthèse, et d'autre part ne dissout pas ni n'imprègne les fibres. Les fibres sont alors retirées du bain contenant ce second solvant plus volatil et sont séchées de la même façon que dans le filage à sec. Cette opération permet de substituer le solvant lourd par un solvant léger volatil aisément éliminable.

### Exemple 1

Afin d'illustrer l'influence et l'importance du taux de réticulation pour le pouvoir d'absorption des fibres, une comparaison est faite, à titre indicatif, entre deux fibres ayant un taux de réticulant différent.

Les deux fibres sont fabriquées par filage à sec à partir d'une solution de synthèse comprenant l'acide polyacrylique dont la masse moléculaire est de 50 000 et l'héxanediol comme agent réticulant.

La première fibre contient 15% de l'héxanediol en poids de polymère initial; la deuxième fibre contient 20% de l'héxanediol en poids de polymère initial.

Les deux fibres obtenues ont un diamètre avant immersion dans l'eau de l'ordre de 40 µm.

Après immersion dans l'eau, il est observé que les fibres voient leur diamètre augmenter mais qu'en augmentant la quantité de réticulant, cette augmentation est limitée d'un facteur 4..

Le diamètre des fibres contenant 15% de l'héxanediol est augmenté jusqu'à 450 µm, alors que le diamètre des fibres contenant 20% de l'héxanediol est seulement augmenté à 110 µm (figure 4).

Avec l'accroissement important du diamètre dans l'eau, les fibres réticulées avec 15% de l'héxanediol sont devenues fragiles et se brisent facilement comme cela est montré sur la figure 5. Dans ces conditions les fibres ne sont pas utilisables comme un matériau de filtration opérationnel.

Au contraire, les fibres réticulées avec 20% de l'héxanediol accroissent leur diamètre de façon plus modérée et ne se brisent plus. Elles sont plus solides vis-à-vis de l'eau et pourront être utilisée comme matériaux opérationnel de filtration.

### Exemple 2 : Réticulation thermique

La réticulation thermique a été faite à partir des fibres réticulées avec 20% d'héxanediol afin d'améliorer encore la limitation d'expansion du diamètre des fibres. Des traitements de 1h , 2h et 3h ont été faits à 200°C.

Les spectres IR ne permettent pas de d'identifier la réticulation thermique car il s'agit de mécanismes radicalaires qui interviennent en interchaine sur le squelette des chaines.

Il n'y a pas de différence de comportement dans l'eau observée entre les fibres recuites pendant 1h, 2h ou 3h.

Pour les fibres réticulées avec 20% de l'héxanediol, le diamètre des fibres passe à 110 µm après 30 minutes d'immersion dans l'eau (figure 6 image de droite).

Lorsque ces fibres ont reçu supplémentairement une étape de traitement thermique, le diamètre de ces fibres n'évoluent plus par rapport au diamètre initial, après 30 minutes d'immersion dans l'eau, cela signifie que l'expansion des fibres est maitrisé (figure 6 au centre).

Lorsque le polymère initial est un polymère sous la forme sodium, tel que le polyacrylate de sodium, avant le traitement thermique, des fibres sont trempées dans le THF acidifié par 2% de l'acide chlorhydrique afin d'extraire le sodium et de convertir le polymère en forme acide (-COOH). C'est uniquement dans cette forme chimique que le polymère peut se réticuler thermiquement. Les fonctions acides se déshydratent en fonction anhydrides qui à 200°C se décarboxylent.

### Exemple 3 : Essaie d'absorption de cuivre

Ces fibres obtenues dans l'exemple 2 ont été testées avec des solutions chargées en ions cuivre et des valeurs de sorption ont été mesurées.

20 mg des fibres réticulées à 20 % en poids sont mises en contact avec 10 ml d'une solution chargée en ions cuivre (sulfate de cuivre à 1.0 g/l). Avant le contact, la solution est bleue et les fibres sont blanches. Après la mise en contact des fibres avec la solution, les fibres deviennent très rapidement bleues alors que la solution se décolore. Cela montre que les ions cuivre sont captés par les fibres dans le volume des fibres.

Cette capacité de traitement du cuivre est similaire à celle des fibres obtenues par électrospinning ou par force spinning c'est-à-dire de l'ordre de 200 à 250 mg/g (milligramme de cuivre par milligramme de fibres).

## Revendications

1. Fibres de diamètre de 10 à 100 µm, notamment de 10 à 80 µm, plus particulièrement de 20 à 50 µm, insolubles et gonflables dans un effluent essentiellement aqueux, susceptibles d'être obtenues par le procédé comprenant les étapes suivantes :
(a) l'obtention des fibres par filage à sec ou filage au mouillé à partir d'une solution de synthèse, ladite solution de synthèse comprenant :
(i) au moins un polymère initial hydrophile et hydrosoluble choisi dans le groupe comprenant :
- l'acide polyacrylique, le polyacrylate de sodium, ou les copolymères de l'acide polyacrylique,
- les dérivés anioniques du polystyrène, tels que le polystyrène sulfonate ou les copolymères du polystyrène sulfonate,
- les dérivés cationiques de polystyrène, tels que le polystyrène trialkylbenzyl ammonium
- la poly(4-vinylpyridine) ou ses dérivés,
- l'alcool polyvinylique ou ses dérivés hydrophiles,
- la polyvinylpyrrolidone, ses dérivés, ou ses copolymères, ou
- un mélange de ceux-ci,
ledit polymère initial hydrophile et hydrosoluble ayant une masse moléculaire de 1×10⁴ à 1,5x10⁶, notamment de 1×10⁴ à 5x10⁵, la teneur en polymère initial hydrophile et hydrosoluble dans la solution de synthèse étant de 5 à 50 %, de préférence de 10 à 30 %, en poids de la solution de synthèse,
(ii) au moins un additif choisi parmi :
- un agent réticulant de 0,05 à 40 %, notamment de 1 à 40%, particulièrement de 5 à 20%, plus particulièrement de 15 à 20%, notamment de 15% ou de 20%, en poids de polymère initial hydrophile et hydrosoluble,
- une molécule complexante de 1- 40%, notamment de 1 à 30% en poids de polymère initial hydrophile et hydrosoluble, ladite molécule complexante étant choisie parmi : un calixarène, un éther couronne, ou
- un mélange de ceux-ci ;
(b) la stabilisation par traitement thermique des fibres obtenues dans l'étape (a) pour obtenir des fibres insolubles mais gonflables dans un effluent essentiellement aqueux,
lesdites fibres ayant un taux de réticulation compris entre 5 et 40%, particulièrement de 5 à 20 %, notamment de 15%,
ledit agent réticulant étant choisi dans le groupe comprenant :
- une diamine, notamment l'hexaméthylènediamine,
- un polymère hydrophile choisi dans le groupe comprenant un polyéthylène glycol, un polyhydroxyéthyl méthacrylate, le polyvinylpyrrolidone, ses dérivés ou ses copolymères,
- un dibromoalcane en (Ci-Cio), notamment le 1,4-dibromo butane
- un dibromo-p-xylène
- un diiodoalcane en (Ci-Cio) notamment le 1,4-diiodo butane
- un dichloroalcane en (Ci-Cio) notamment le 1,4-dichloro butane, et
- un calixarène de formule I 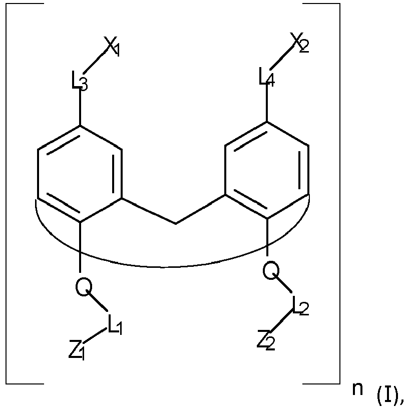 dans laquelle :
- X₁ et X₂ représentent chacun indépendamment l'un de l'autre H ou un groupe 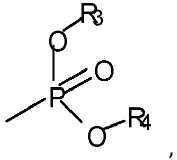 dans lequel R₃ et R₄ représentent chacun, indépendamment l'un de l'autre, H ou un groupe alkyle en (C₁-C₈), à condition que X₁ et X₂ ne représentent pas simultanément H,
- L₁, L2, L₃ et L₄ sont des groupements espaceurs, choisis indépendamment les uns des autres, dans le groupe consistant en un cycloalkylènyle en (C₃-C₁₀), O, NH, -(CH₂)_{q}-, q étant un nombre entier de 1 à 12,
- Z₁ et Z₂ représentent chacun, indépendamment l'un de l'autre, un groupement fonctionnel choisi parmi une amine éventuellement protégée, F, Cl, Br, I, OH, C(=O)H, C(=O)Hal, un groupe aryle ou un groupe aryle substitué, tel qu'un tosyle, un groupement diazonium, un hétérocycle aromatique tel qu'un groupe pyrrolyle, furyle, thiényle, ou pyridinyle, un groupe sulfate ou sulfonate éventuellement protégé,
- n est un nombre entier de 1 à 10 ; ou un calixarène de formule II 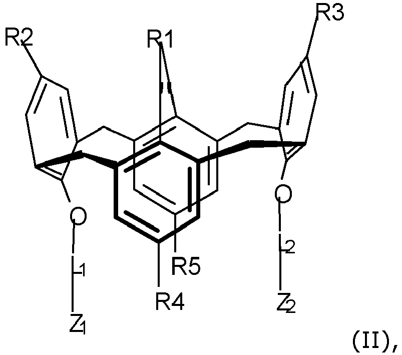 dans laquelle :
- R1 est choisi parmi -X(C₂H₄X)ₘ-, ou - X(C₂H₄X)_{p/2}YX(C₂H₄)_{p/2}-, X étant choisi indépendamment parmi o et/ou N, m étant égale à 3, 4, 5 ou 6, p étant égale à 2 ou 4, Y étant un cycloalkylène en (C₃-C₁₀) ou un arylène en (C₆-C₁₀) ; et
- R₂ à R₅ sont choisis indépendamment l'un de l'autre parmi H, ou un alkyle (C₁-C₆) ;
- L₁ et L₂ sont des groupements espaceurs, choisis indépendamment les uns des autres, parmi un cycloalkylène en (C₃-C₁₀) ou un arylène en (C₃-C₁₀), - (CH₂)_{q}-, q étant un nombre entier de 1 à 12 ;
- Z₁, Z₂ sont des groupements de greffage, choisis indépendamment les uns des autres, parmi F, Cl, Br, I, -OHNH₂, -C(=O)Hal, -C(=O)OH, un groupe aryle ou un groupe aryle substitué, tel qu'un tosyle, un groupement diazonium, un hétérocycle aromatique tel qu'un groupe pyrrolyle, furyle, thiényle, ou pyridinyle, un groupe sulfate ou sulfonate éventuellement protégé
- un polyol en (C₂-C₁₀) contenant de 2 à 4 groupes hydroxyle, notamment un alcane diol en (C₂-C₁₀).

2. Fibres insolubles et gonflables selon la revendication 1, **caractérisées en ce qu'**elles sont obtenues par le procédé comprenant les étapes suivantes :
(a) l'obtention des fibres par filage à sec ou filage au mouillé à partir d'une solution de synthèse, ladite solution comprenant un agent réticulant et un polymère initial hydrophile et hydrosoluble tel que défini dans la revendication 1 ayant une masse moléculaire de 1×10⁴ à 1,5x10⁶, notamment de 1×10⁴ à 5×10⁵,
(b) la stabilisation des fibres obtenues dans l'étape (a) par un traitement thermique pour obtenir des fibres insolubles et gonflables dans un effluent essentiellement aqueux.

3. Fibres insolubles et gonflables selon la revendication 1 ou 2, **caractérisées en ce qu'**elles sont obtenues à partir d'une solution de synthèse aqueuse comprenant de l'acide polyacrylique comme polymère initial et le 1,6-hexanediol comme agent réticulant.

4. Fibres insolubles et gonflables selon la revendication 1 ou 2, **caractérisées en ce qu'**elles sont obtenues à partir d'une solution de synthèse comprenant de l'acide polyacrylique comme polymère initial et l'hexaméthylènediamine comme agent réticulant.

5. Fibres insolubles et gonflables selon l'une quelconque des revendications 1 à 4, **caractérisées en ce que** la susdite solution de synthèse comprend en outre un calixarène de formule I ou de formule II tel que défini dans la revendication 2.

6. Fibres insolubles et gonflables selon la revendication 1 ou 2, **caractérisées en ce que** la susdite solution de synthèse est une solution eau/éthanol.

7. Matériau constitué par des fibres insolubles mais gonflables dans un solvant essentiellement aqueux selon l'une quelconque des revendications 1 à 6.

8. Utilisation des fibres insolubles et gonflables dans un effluent essentiellement aqueux selon l'une quelconque des revendications 1 à 6, ou un matériau selon la revendication 7, pour traiter un effluent contenant des métaux, notamment les sels métalliques issus des métaux lourds, des terres rares, des métaux alcalins, des alcalino-terreux, ou des actinides, dans leurs formes isotopiques stables ou instables.

9. Utilisation selon la revendication 8, pour traiter un effluent contenant du césium, **caractérisée en ce que** les fibres sont obtenues à partir d'une solution de synthèse organique comprenant :
- l'acide polyacrylique ou ses dérivés anioniques, et
- un calixarène de formule I ou formule II ou un calixarène non réticulant.

10. Utilisation selon la revendication 8, pour traiter un effluent contenant du cuivre, **caractérisée en ce que** lesdites fibres sont obtenues à partir d'une solution aqueuse de l'acide polyacrylique ou de co-polymères.

11. Utilisation selon la revendication 8, pour traiter un effluent contenant de l'uranium, **caractérisée en ce que** lesdites fibres sont obtenues à partir d'une solution de synthèse comprenant les dérivés cationiques de polystyrène.

12. Procédé d'extraction dans un effluent des métaux, notamment les sels métalliques issus des métaux lourds, des terres rares, des métaux alcalins, des alcalino-terreux, ou des actinides, dans leurs formes isotopiques stables ou instables, comprenant les étapes suivantes :
(i) placer des fibres insolubles mais gonflables selon l'une quelconque des revendications 1 à 6 ou un matériau selon la revendication 7 dans un effluent essentiellement aqueux pendant un temps suffisant ;
(ii) récupérer les métaux, notamment les sels métalliques issues des métaux lourds, des terres rares, des métaux alcalins, des alcalino-terreux, ou des actinides, dans leurs formes isotopiques stables ou instables complexés par lesdites fibres ou ledit matériau en plaçant lesdites fibres ou ledit matériau dans une solution de régénération.

13. Procédé selon la revendication 12, **caractérisé en ce que** ladite solution de régénération est une solution acide.

14. Procédé de préparation des fibres de diamètre de 10 à 100 µm, notamment de 10 à 80 µm, plus particulièrement de 20 à 50 µm, insolubles et gonflables dans un effluent essentiellement aqueux, ledit procédé comprenant les étapes suivantes :
(a) l'obtention des fibres par filage à sec ou filage au mouillé à partir d'une solution de synthèse, ladite solution de synthèse comprenant :
(i) au moins un polymère initial hydrophile et hydrosoluble choisi dans le groupe comprenant :
- l'acide polyacrylique, le polyacrylate de sodium, ou les copolymères de l'acide polyacrylique,
- les dérivés anioniques du polystyrène, tels que le polystyrène sulfonate ou les copolymères du polystyrène sulfonate,
- les dérivés cationiques de polystyrène, tels que le polystyrène trialkylbenzyl ammonium
- la poly(4-vinylpyridine) ou ses dérivés,
- l'alcool polyvinylique ou ses dérivés hydrophiles,
- la polyvinylpyrrolidone, ses dérivés, ou ses copolymères, ou
- un mélange de ceux-ci,
ledit polymère initial hydrophile et hydrosoluble ayant une masse moléculaire de 1×10⁴ à 1,5x10⁶, notamment de 1×10⁴ à 5x10⁵, la teneur en polymère initial hydrophile et hydrosoluble dans la solution de synthèse étant de 5 à 50 %, de préférence de 10 à 30 %, en poids de la solution de synthèse,
(ii) au moins un additif choisi parmi :
- un agent réticulant de 0,05 à 40 %, notamment de 1 à 40%, particulièrement de 5 à 20%, plus particulièrement de 15 à 20%, notamment de 15% ou de 20%, en poids de polymère initial hydrophile et hydrosoluble,
- une molécule complexante de 1- 40%, notamment de 1 à 30% en poids de polymère initial hydrophile et hydrosoluble, ladite molécule complexante étant choisie parmi : un calixarène, un éther couronne, ou
- un mélange de ceux-ci ;
(b) la stabilisation par traitement thermique des fibres obtenues dans l'étape précédente pour obtenir des fibres insolubles mais gonflables dans un effluent essentiellement aqueux,
dans ledit procédé, ledit agent réticulant étant choisi dans le groupe comprenant :
- une diamine, notamment l'hexaméthylènediamine,
- un polymère hydrophile choisi dans le groupe comprenant un polyéthylène glycol, un polyhydroxyéthyl méthacrylate, le polyvinylpyrrolidone, ses dérivés ou ses copolymères,
- un dibromoalcane en (C₁-C₁₀), notamment le 1,4-dibromo butane
- un dibromo-p-xylène
- un diiodoalcane en (C₁-C₁₀) notamment le 1,4-diiodo butane
- un dichloroalcane en (C₁-C₁₀) notamment le 1,4-dichloro butane, et
- un calixarène de formule I 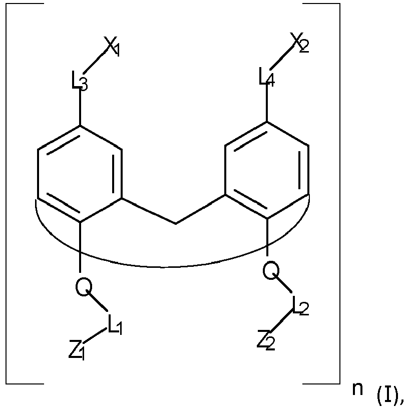
dans laquelle :
- X₁ et X₂ représentent chacun indépendamment l'un de l'autre H ou un groupe 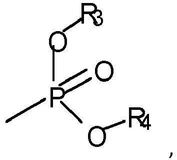 dans lequel R₃ et R₄ représentent chacun, indépendamment l'un de l'autre, H ou un groupe alkyle en (C₁-C₈), à condition que X₁ et X₂ ne représentent pas simultanément H,
- L₁, L₂, L₃ et L₄ sont des groupements espaceurs, choisis indépendamment les uns des autres, dans le groupe consistant en un cycloalkylènyle en (C₃-C₁₀), O, NH, -(CH₂)_{q}-, q étant un nombre entier de 1 à 12,
- Z₁ et Z₂ représentent chacun, indépendamment l'un de l'autre, un groupement fonctionnel choisi parmi une amine éventuellement protégée, F, Cl, Br, I, OH, C(=O)H, C(=O)Hal, un groupe aryle ou un groupe aryle substitué, tel qu'un tosyle, un groupement diazonium, un hétérocycle aromatique tel qu'un groupe pyrrolyle, furyle, thiényle, ou pyridinyle, un groupe sulfate ou sulfonate éventuellement protégé,
- n est un nombre entier de 1 à 10 ; ou un calixarène de formule II 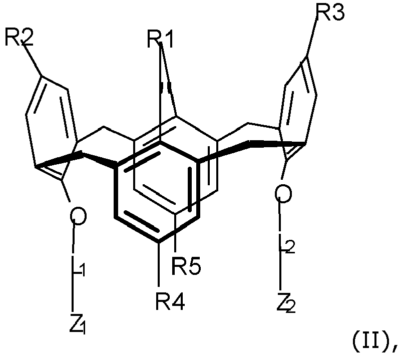 dans laquelle :
- R1 est choisi parmi -X(C₂H₄X)ₘ-, ou-X(C₂H₄X)_{p/2}YX(C₂H₄)_{p/2}-, X étant choisi indépendamment parmi O et/ou N, m étant égale à 3, 4, 5 ou 6, p étant égale à 2 ou 4, Y étant un cycloalkylène en (C₃-C₁₀) ou un arylène en (C₆-C₁₀) ; et
- R₂ à R₅ sont choisis indépendamment l'un de l'autre parmi H, ou un alkyle (C₁-C₆) ;
- L₁ et L₂ sont des groupements espaceurs, choisis indépendamment les uns des autres, parmi un cycloalkylène en (C₃-C₁₀) ou un arylène en (C₃-C₁₀), - (CH₂)_{q}-, q étant un nombre entier de 1 à 12 ;
- Z₁, Z₂ sont des groupements de greffage, choisis indépendamment les uns des autres, parmi F, Cl, Br, I, -OHNH₂, -C(=O)Hal, -C(=O)OH, un groupe aryle ou un groupe aryle substitué, tel qu'un tosyle, un groupement diazonium, un hétérocycle aromatique tel qu'un groupe pyrrolyle, furyle, thiényle, ou pyridinyle, un groupe sulfate ou sulfonate éventuellement protégé un polyol en (C₂-C₁₀) contenant de 2 à 4 groupes hydroxyle, notamment un alcane diol en (C₂-C₁₀)..

## Patentansprüche

1. Fasern mit einem Durchmesser von 10 bis 100 µm, insbesondere 10 bis 80 µm, insbesondere 20 bis 50 µm, die in einem im Wesentlichen wässrigen Abfluss unlöslich und quellbar sind, erhältlich durch das Verfahren, das die folgenden Schritte umfasst:
(a) Gewinnung von Fasern durch Trockenspinnen oder Nassspinnen aus einer synthetischen Lösung, wobei die synthetische Lösung enthält:
(i) mindestens ein hydrophiles und wasserlösliches Ausgangspolymer, ausgewählt aus der Gruppe, die umfasst:
- Polyacrylsäure, Natriumpolyacrylat, oder Copolymere der Polyacrylsäure,
- anionische Derivate von Polystyrol, wie Polystyrolsulfonat oder Copolymere von Polystyrolsulfonat,
- kationische Polystyrolderivate, wie Polystyroltrialkylbenzylammonium
- Poly(4-vinylpyridin) oder seine Derivate,
- Polyvinylalkohol oder dessen hydrophile Derivate,
- Polyvinylpyrrolidon, seine Derivate oder seine Copolymere, oder
- eine Mischung daraus,
wobei das hydrophile und wasserlösliche Ausgangspolymer ein Molekulargewicht von 1×10⁴ bis 1,5x10⁶, insbesondere von 1×10⁴ bis 5x10⁵, besitzt, wobei der Gehalt des hydrophilen und wasserlöslichen Ausgangspolymers in der synthetischen Lösung 5 bis 50%, vorzugsweise 10 bis 30%, bezogen auf das Gewicht der synthetischen Lösung, beträgt,
(ii) mindestens einen Zusatzstoff, ausgewählt aus:
- einem Vernetzungsmittel von 0,05 bis 40%, insbesondere von 1 bis 40%, insbesondere von 5 bis 20%, insbesondere von 15 bis 20%, insbesondere von 15% oder 20%, bezogen auf das Gewicht des hydrophilen und wasserlöslichen Ausgangspolymers,
- einem komplexbildenden Molekül von 1 bis 40 Gew.-%, insbesondere von 1 bis 30 Gew.-% des hydrophilen und wasserlöslichen Ausgangspolymers, wobei das komplexbildende Molekül ausgewählt ist aus: einem Calixaren, einem Kronenether, oder
- einer Mischung daraus;
(b) Stabilisierung der in Schritt (a) gewonnenen Fasern durch Wärmebehandlung, um Fasern zu erhalten, die in einem im Wesentlichen wässrigen Abfluss unlöslich, aber quellbar sind,
wobei die Fasern einen Vernetzungsgrad im Bereich von 5 bis 40%, insbesondere 5 bis 20%, insbesondere 15%, aufweisen,
wobei das Vernetzungsmittel ausgewählt ist aus der Gruppe, die umfasst:
- ein Diamin, insbesondere Hexamethylendiamin,
- ein hydrophiles Polymer, ausgewählt aus der Gruppe umfassend ein Polyethylenglykol, ein Polyhydroxyethylmethacrylat, Polyvinylpyrrolidon, dessen Derivate oder dessen Copolymere,
- ein (C₁-C₁₀)-Dibromalkan, insbesondere 1,4-Dibrombutan
- ein Dibromo-p-Xylol
- ein (C₁-C₁₀)-Diiodoalkan, insbesondere 1,4-Diiodbutan
- ein (C₁-C₁₀)-Dichloralkan, insbesondere 1,4-Dichlorbutan, und
- ein Calixaren der Formel I 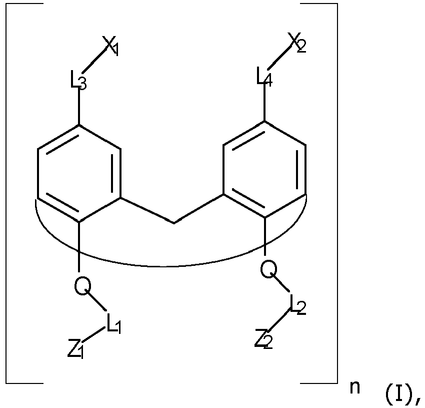 in welchem:
- X₁ und X₂ jeweils unabhängig voneinander H oder eine 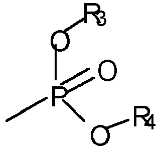 -Gruppe darstellen, in der R₃ und R₄ unabhängig voneinander H oder eine (C₁-C₈)-Alkylgruppe darstellen, mit der Maßgabe, dass X₁ und X₂ nicht gleichzeitig H darstellen,
- L₁, L₂, L₃ und L₄ Abstandshaltergruppen sind, die unabhängig voneinander ausgewählt sind aus der Gruppe bestehend aus (C₃-C₁₀)-Cycloalkylenyl, O, NH, -(CH₂)_{q}-, wobei q eine ganze Zahl von 1 bis 12 ist,
- Z₁ und Z₂ jeweils unabhängig voneinander eine funktionelle Gruppe darstellen, ausgewählt aus einem eventuell geschützten Amin, F, Cl, Br, I, OH, C(=O)H, C(=O)Hal, einer Arylgruppe oder einer substituierten Arylgruppe, wie ein Tosyl, einer Diazoniumgruppe, einem aromatischen Heterocyclus, wie einer Pyrrolyl-, Furyl-, Thienyl- oder Pyridinylgruppe, einer eventuell geschützten Sulfat- oder Sulfonatgruppe,
- n eine ganze Zahl von 1 bis 10 ist; oder ein Calixaren der Formel II 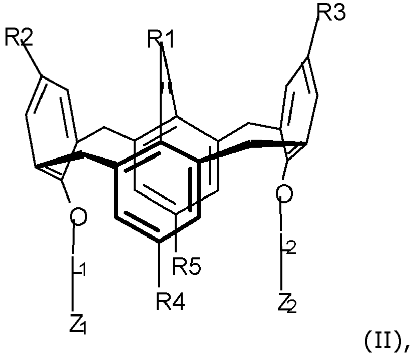 in welcher:
- R₁ ausgewählt ist aus -X(C₂H₄X)ₘ-, oder -X(C₂H₄X)_{p/2}YX(C₂H₄)_{p/2}-, wobei X unabhängig ausgewählt ist aus O und/oder N, wobei m 3, 4, 5 oder 6 ist, wobei p 2 oder 4 ist, wobei Y ein (C₃-C₁₀)-Cycloalkylen oder ein (C₆-C₁₀)-Arylen ist; und
- R₂ bis R₅ unabhängig voneinander ausgewählt sind aus H oder einem (C₁-C₆)-Alkyl;
- L₁ und L₂ Abstandshaltergruppen sind, die unabhängig voneinander ausgewählt sind aus einem (C₃-C₁₀)-Cycloalkylen oder einem (C₃-C₁₀)-Arylen, -(CH₂)_{q}-, wobei q eine ganze Zahl von 1 bis 12 ist;
- Z₁ und Z₂ Pfropfgruppen sind, die unabhängig voneinander ausgewählt sind aus F, Cl, Br, I, OHNH₂, -C(=O)Hal, -C(=O)OH, einer Arylgruppe oder einer substituierten Arylgruppe, wie ein Tosyl, einer Diazoniumgruppe, einem aromatischen Heterocyclus, wie einer Pyrrolyl-, Furyl-, Thienyl-oder Pyridinylgruppe, einer eventuell geschützten Sulfat- oder Sulfonatgruppe
- ein (C₂-C₁₀)-Polyol mit 2 bis 4 Hydroxylgruppen, insbesondere ein (C₂-C₁₀)-Alkandiol.

2. Unlösliche und quellbare Fasern nach Anspruch 1, **dadurch gekennzeichnet, dass** diese durch das Verfahren erhalten werden, das die folgenden Schritte umfasst:
(a) Gewinnung der Fasern durch Trockenspinnen oder Nassspinnen aus einer synthetischen Lösung, wobei die Lösung ein Vernetzungsmittel und ein hydrophiles und wasserlösliches Ausgangspolymer wie in Anspruch 1 definiert mit einem Molekulargewicht von 1×10⁴ bis 1,5×10⁶, insbesondere 1×10⁴ bis 5×10⁵, enthält,
(b) Stabilisierung der in Schritt (a) gewonnenen Fasern durch eine Wärmebehandlung, um Fasern zu erhalten, die in einem im Wesentlichen wässrigen Abfluss unlöslich und quellbar sind.

3. Unlösliche und quellbare Fasern nach Anspruch 1 oder 2, **dadurch gekennzeichnet, dass** diese aus einer wässrigen synthetischen Lösung erhalten werden, die Polyacrylsäure als Ausgangspolymer und 1,6-Hexandiol als Vernetzungsmittel enthält.

4. Unlösliche und quellbare Fasern nach Anspruch 1 oder 2, **dadurch gekennzeichnet, dass** diese aus einer synthetischen Lösung erhalten werden, die Polyacrylsäure als Ausgangspolymer und Hexamethylendiamin als Vernetzungsmittel enthält.

5. Unlösliche und quellbare Fasern nach einem der Ansprüche 1 bis 4, **dadurch gekennzeichnet, dass** die synthetische Lösung ferner ein Calixaren der Formel I oder der Formel II wie in Anspruch 2 definiert enthält.

6. Unlösliche und quellbare Fasern nach Anspruch 1 oder 2, **dadurch gekennzeichnet, dass** die synthetische Lösung eine Wasser/Ethanol-Lösung ist.

7. Material, gebildet aus Fasern, die in einem im Wesentlichen wässrigen Lösungsmittel unlöslich, aber quellbar sind, nach einem der Ansprüche 1 bis 6.

8. Verwendung der Fasern, die in einem im Wesentlichen wässrigen Abfluss unlöslich und quellbar sind, nach einem der Ansprüche 1 bis 6, oder eines Materials nach Anspruch 7, zur Behandlung eines Abwassers, das Metalle, insbesondere Metallsalze von Schwermetallen, Seltenen Erden, Alkalimetallen, Erdalkalien oder Actiniden, in ihren stabilen oder instabilen Isotopenformen enthält.

9. Verwendung nach Anspruch 8 zur Behandlung eines cäsiumhaltigen Abwassers, **dadurch gekennzeichnet, dass** die Fasern aus einer organischen synthetischen Lösung erhalten werden, die enthält:
- Polyacrylsäure oder ihre anionische Derivate, und
- ein Calixaren der Formel I oder Formel II oder ein nicht vernetzendes Calixaren.

10. Verwendung nach Anspruch 8 zur Behandlung eines kupferhaltigen Abwassers, **dadurch gekennzeichnet, dass** die Fasern aus einer wässrigen Lösung von Polyacrylsäure oder von Co-Polymeren erhalten werden.

11. Verwendung nach Anspruch 8 zur Behandlung eines uranhaltigen Abwassers, **dadurch gekennzeichnet, dass** die Fasern aus einer synthetischen Lösung erhalten werden, die die kationischen Derivate von Polystyrol enthält.

12. Verfahren zur Extraktion von Metallen, insbesondere Metallsalzen von Schwermetallen, Seltenen Erden, Alkalimetallen, Erdalkalien oder Actiniden, in ihren stabilen oder instabilen Isotopenformen, aus einem Abwasser, umfassend die folgenden Schritte:
(i) Einbringen der unlöslichen, aber quellbaren Fasern nach einem der Ansprüche 1 bis 6 oder eines Materials nach Anspruch 7 für eine ausreichende Dauer in einen im Wesentlichen wässrigen Abfluss;
(ii) Rückgewinnung der Metalle, insbesondere der Metallsalze von Schwermetallen, Seltenen Erden, Alkalimetallen, Erdalkalien oder Actiniden, in ihren stabilen oder instabilen Isotopenformen, die von den Fasern oder dem Material komplexiert werden, indem die Fasern oder das Material in eine Regenerationslösung gegeben werden.

13. Verfahren nach Anspruch 12, **dadurch gekennzeichnet, dass** die Regenerationslösung eine saure Lösung ist.

14. Verfahren zur Herstellung von Fasern mit einem Durchmesser von 10 bis 100 µm, insbesondere von 10 bis 80 µm, insbesondere von 20 bis 50 µm, die in einem im Wesentlichen wässrigen Abfluss unlöslich und quellbar sind, wobei das Verfahren die folgenden Schritte umfasst:
(a) Gewinnung von Fasern durch Trockenspinnen oder Nassspinnen aus einer synthetischen Lösung, wobei die synthetische Lösung enthält:
(i) mindestens ein hydrophiles und wasserlösliches Ausgangspolymer, ausgewählt aus der Gruppe, die umfasst:
- Polyacrylsäure, Natriumpolyacrylat, oder Copolymere der Polyacrylsäure,
- anionische Derivate von Polystyrol, wie Polystyrolsulfonat oder Copolymere von Polystyrolsulfonat,
- kationische Polystyrolderivate, wie Polystyroltrialkylbenzylammonium
- Poly(4-vinylpyridin) oder seine Derivate,
- Polyvinylalkohol oder dessen hydrophile Derivate,
- Polyvinylpyrrolidon, seine Derivate oder seine Copolymere, oder
- eine Mischung daraus,
wobei das hydrophile und wasserlösliche Ausgangspolymer ein Molekulargewicht von 1×10⁴ bis 1,5×10⁶, insbesondere von 1×10⁴ bis 5×10⁵, besitzt, wobei der Gehalt des hydrophilen und wasserlöslichen Ausgangspolymers in der synthetischen Lösung 5 bis 50%, vorzugsweise 10 bis 30%, bezogen auf das Gewicht der synthetischen Lösung, beträgt,
(ii) mindestens einen Zusatzstoff, ausgewählt aus:
- einem Vernetzungsmittel von 0,05 bis 40%, insbesondere von 1 bis 40%, insbesondere von 5 bis 20%, insbesondere von 15 bis 20%, insbesondere von 15% oder 20%, bezogen auf das Gewicht des hydrophilen und wasserlöslichen Ausgangspolymers,
- einem komplexbildenden Molekül von 1 bis 40 Gew.-%, insbesondere von 1 bis 30 Gew.-% des hydrophilen und wasserlöslichen Ausgangspolymers, wobei das komplexbildende Molekül ausgewählt ist aus: einem Calixaren, einem Kronenether, oder
- einer Mischung daraus;
(b) Stabilisierung der im vorhergehenden Schritt gewonnenen Fasern durch Wärmebehandlung, um Fasern zu erhalten, die in einem im Wesentlichen wässrigen Abfluss unlöslich, aber quellbar sind,
wobei in dem Verfahren das Vernetzungsmittel ausgewählt ist aus der Gruppe, die umfasst:
- ein Diamin, insbesondere Hexamethylendiamin,
- ein hydrophiles Polymer, ausgewählt aus der Gruppe umfassend ein Polyethylenglykol, ein Polyhydroxyethylmethacrylat, Polyvinylpyrrolidon, dessen Derivate oder dessen Copolymere,
- ein (C₁-C₁₀)-Dibromalkan, insbesondere 1,4-Dibrombutan
- ein Dibromo-p-Xylol
- ein (C₁-C₁₀)-Diiodoalkan, insbesondere 1,4-Diiodbutan
- ein (C₁-C₁₀)-Dichloralkan, insbesondere 1,4-Dichlorbutan, und
- ein Calixaren der Formel I 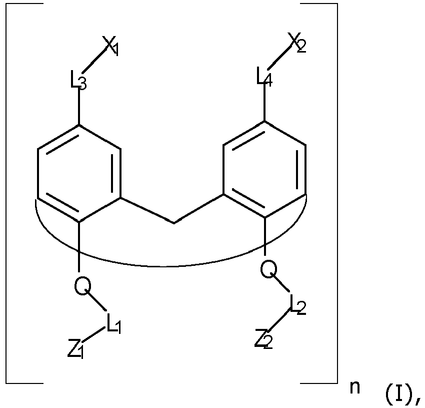
in welchem:
- X₁ und X₂ jeweils unabhängig voneinander H oder eine 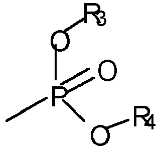
- Gruppe darstellen, in der R₃ und R₄ unabhängig voneinander H oder (C₁-C₈)-Alkyl darstellen, mit der Maßgabe, dass X₁ und X₂ nicht gleichzeitig H sind,
- L₁, L₂, L₃ und L₄ Abstandshaltergruppen sind, die unabhängig voneinander ausgewählt sind aus der Gruppe bestehend aus (C₃-C₁₀)-Cycloalkylenyl, O, NH, -(CH₂)_{q}-, wobei q eine ganze Zahl von 1 bis 12 ist,
- Z₁ und Z₂ jeweils unabhängig voneinander eine funktionelle Gruppe darstellen, ausgewählt aus einem eventuell geschützten Amin, F, Cl, Br, I, OH, C(=O)H, C(=O)Hal, einer Arylgruppe oder einer substituierten Arylgruppe, wie einer Tosylgruppe, einer Diazoniumgruppe, einem aromatischen Heterocyclus, wie einer Pyrrolyl-, Furyl-, Thienyl- oder Pyridinylgruppe, einer eventuell geschützten Sulfat- oder Sulfonatgruppe,
- n eine ganze Zahl von 1 bis 10 ist; oder ein Calixaren der Formel II 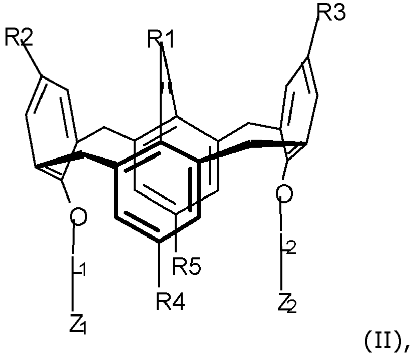 in welcher:
- R₁ ausgewählt ist aus -X(C₂H₄X)ₘ-, oder -X(C₂H₄X)_{p/2}YX(C₂H₄)_{p/2}-, wobei X unabhängig ausgewählt ist aus O und/oder N, wobei m 3, 4, 5 oder 6 ist, wobei p 2 oder 4 ist, wobei Y ein (C₃-C₁₀)Cycloalkylen oder ein (C₆-C₁₀)Arylen ist; und
- R₂ bis R₅ unabhängig voneinander ausgewählt sind aus H oder einem (C₁-C₆)-Alkyl;
- L₁ und L₂ Abstandshaltergruppen sind, die unabhängig voneinander ausgewählt sind aus einem (C₃-C₁₀)-Cycloalkylen oder einem (C₃-C₁₀)-Arylen, -(CH₂)_{q}-, wobei q eine ganze Zahl von 1 bis 12 ist;
- Z₁ und Z₂ Pfropfgruppen sind, die unabhängig voneinander ausgewählt sind aus F, Cl, Br, I, OHNH₂, -C(=O)Hal, -C(=O)OH, einer Arylgruppe oder einer substituierten Arylgruppe, wie einer Tosylgruppe, einer Diazoniumgruppe, einem aromatischen Heterocyclus, wie einer Pyrrolyl-, Furyl-, Thienyl- oder Pyridinylgruppe, einer eventuell geschützten Sulfat- oder Sulfonatgruppe
ein (C₂-C₁₀)-Polyol mit 2 bis 4 Hydroxylgruppen, insbesondere ein (C₂-C₁₀)-Alkandiol.

## Claims

1. Fibres with a diameter from 10 to 100 µm, in particular from 10 to 80 µm, more particularly from 20 to 50 µm, insoluble and swellable in an essentially aqueous effluent, obtainable by the method comprising the following steps:
(a) obtaining the fibres by dry spinning or wet spinning from a synthesis solution, said synthesis solution comprising:
(i) at least one hydrophilic, water-soluble initial polymer selected from the group comprising:
- polyacrylic acid, sodium polyacrylate, or polyacrylic acid copolymers,
- anionic derivatives of polystyrene, such as polystyrene sulphonate or polystyrene sulphonate copolymers,
- cationic derivatives of polystyrene, such as polystyrene trialkylbenzyl ammonium
- poly(4-vinylpyridine) or derivatives thereof,
- polyvinyl alcohol or hydrophilic derivatives thereof,
- polyvinylpyrrolidone, derivatives thereof, or copolymers thereof, or
- a mixture thereof,
said hydrophilic, water-soluble initial polymer having a molecular weight from 1×10⁴ to 1.5×10⁶, in particular from 1×10⁴ to 5×10⁵, the content of hydrophilic, water-soluble initial polymer in the synthesis solution being from 5 to 50%, preferably from 10 to 30%, by weight of the synthesis solution,
(ii) at least one additive selected from:
- a cross-linking agent from 0.05 to 40%, in particular from 1 to 40%, particularly from 5 to 20%, more particularly from 15 to 20%, in particular of 15% or of 20%, by weight of hydrophilic, water-soluble initial polymer,
- a complexing molecule from 1 to 40%, in particular from 1 to 30% by weight of hydrophilic, water-soluble initial polymer, said complexing molecule being selected from: a calixarene, a crown ether, or
- a mixture thereof;
(b) stabilization by heat treatment of the fibres obtained in step (a) to obtain fibres that are insoluble but swellable in an essentially aqueous effluent, said fibres having a degree of cross-linking between 5 and 40%, particularly from 5 to 20%, in particular of 15%, said cross-linking agent being selected from the group comprising:
- a diamine, in particular hexamethylenediamine,
- a hydrophilic polymer selected from the group comprising a polyethylene glycol, a polyhydroxyethyl methacrylate, polyvinylpyrrolidone, derivatives thereof or copolymers thereof,
- a (C₁-C₁₀) dibromoalkane, in particular 1,4-dibromobutane
- a dibromo-p-xylene
- a (C₁-C₁₀) diiodoalkane, in particular 1,4-diiodobutane
- a (C₁-C₁₀) dichloroalkane, in particular 1,4-dichlorobutane, and
- a calixarene of formula I 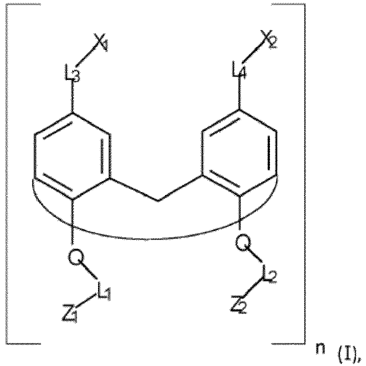 in which:
- X₁ and X₂ each represent, independently of one another, H or a group 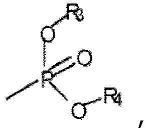 in which R₃ and R₄ each represent, independently of one another, H or a (C₁-C₈) alkyl group, provided that X₁ and X₂ do not represent H simultaneously,
- L₁, L₂, L₃ and L₄ are spacer groups, selected independently of one another from the group consisting of a (C₃-C₁₀) cycloalkylenyl, O, NH, -(CH₂)_{q}-, q being an integer from 1 to 12,
- Z₁ and Z₂ each represent, independently of one another, a functional group selected from an optionally protected amine, F, CI, Br, I, OH, C(=O)H, C(=O)Hal, an aryl group or a substituted aryl group, such as a tosyl, a diazonium group, an aromatic heterocycle such as a pyrrolyl, furyl, thienyl, or pyridinyl group, an optionally protected sulphate or sulphonate group,
- n is an integer from 1 to 10; or a calixarene of formula II 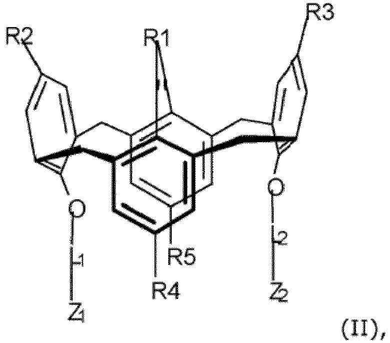 in which:
- R1 is selected from -X(C2H4X)m-, or -X(C₂H₄X)_{p/2}YX(C₂H₄)_{p/2}-, X being selected independently from O and/or N, m being equal to 3, 4, 5 or 6, p being equal to 2 or 4, Y being a (C₃-C₁₀) cycloalkylene or a (C₆-C₁₀) arylene; and
- R₂ to R₅ are selected independently of one another from H, or a (C₁-C6) alkyl;
- L₁ and L₂ are spacer groups, selected independently of one another from a (C₃-C₁₀) cycloalkylene or a (C₃-C₁₀) arylene, -(CH₂)_{q}-, q being an integer from 1 to 12;
- Z₁, Z₂ are grafting groups, selected independently of one another from F, Cl, Br, I, -OHNH₂, -C(=O)Hal, -C(=O)OH, an aryl group or a substituted aryl group, such as a tosyl, a diazonium group, an aromatic heterocycle such as a pyrrolyl, furyl, thienyl, or pyridinyl group, an optionally protected sulphate or sulphonate group
- a (C₂-C₁₀) polyol containing from 2 to 4 hydroxyl groups, in particular a (C₂-C₁₀) alkanediol.

2. Insoluble, swellable fibres according to claim 1, **characterized in that** they are obtained by the method comprising the following steps:
(a) obtaining the fibres by dry spinning or wet spinning starting from a synthesis solution, said solution comprising a cross-linking agent and a hydrophilic, water-soluble initial polymer as defined in claim 1 having a molecular weight from 1×10⁴ to 1.5×10⁶, in particular from 1×10⁴ to 5×10⁵,
(b) stabilization of the fibres obtained in step (a) by a thermal treatment to obtain fibres that are insoluble and swellable in an essentially aqueous effluent.

3. Insoluble, swellable fibres according to claim 1 or 2, **characterized in that** they are obtained from an aqueous synthesis solution comprising polyacrylic acid as initial polymer and 1,6-hexanediol as cross-linking agent.

4. Insoluble, swellable fibres according to claim 1 or 2, **characterized in that** they are obtained from a synthesis solution comprising polyacrylic acid as initial polymer and hexamethylenediamine as cross-linking agent.

5. Insoluble, swellable fibres according to any one of claims 1 to 4, **characterized in that** the aforesaid synthesis solution further comprises a calixarene of formula I or of formula II as defined in claim 2.

6. Insoluble, swellable fibres according to claim 1 or 2, **characterized in that** the aforesaid synthesis solution is a water/ethanol solution.

7. Material constituted by fibres that are insoluble but swellable in an essentially aqueous solvent according to any one of claims 1 to 6.

8. Use of the fibres that are insoluble and swellable in an essentially aqueous effluent according to any one of claims 1 to 6, or a material according to claim 7, for treating an effluent containing metals, in particular the metal salts derived from heavy metals, rare earths, alkali metals, alkaline-earth metals, or actinides, in their stable or unstable isotopic forms.

9. Use according to claim 8, for treating an effluent containing caesium, **characterized in that** the fibres are obtained from an organic synthesis solution comprising:
- polyacrylic acid or anionic derivatives thereof, and
- a calixarene of formula I or formula II or a non-cross-linking calixarene.

10. Use according to claim 8, for treating an effluent containing copper, **characterized in that** said fibres are obtained from an aqueous solution of polyacrylic acid or of copolymers.

11. Use according to claim 8, for treating an effluent containing uranium, **characterized in that** said fibres are obtained from a synthesis solution comprising the cationic derivatives of polystyrene.

12. Method of extracting metals from an effluent, in particular the metal salts derived from heavy metals, rare earths, alkali metals, alkaline-earth metals, or actinides, in their stable or unstable isotopic forms, comprising the following steps:
(i) placing insoluble but swellable fibres according to any one of claims 1 to 6 or a material according to claim 7 in an essentially aqueous effluent for a sufficient time;
(ii) recovering the metals, in particular the metal salts derived from heavy metals, rare earths, alkali metals, alkaline-earth metals, or actinides, in their stable or unstable isotopic forms complexed by said fibres or said material by placing said fibres or said material in a regenerating solution.

13. Method according to claim 12, **characterized in that** said regenerating solution is an acid solution.

14. Method for preparing the fibres with a diameter from 10 to 100 µm, in particular from 10 to 80 µm, more particularly from 20 to 50 µm, which are insoluble and swellable in an essentially aqueous effluent, said method comprising the following steps:
(a) obtaining the fibres by dry spinning or wet spinning starting from a synthesis solution, said synthesis solution comprising:
(i) at least one hydrophilic, water-soluble initial polymer selected from the group comprising:
- polyacrylic acid, sodium polyacrylate, or polyacrylic acid copolymers,
- anionic derivatives of polystyrene, such as polystyrene sulphonate or polystyrene sulphonate copolymers,
- cationic derivatives of polystyrene, such as polystyrene trialkylbenzyl ammonium
- poly(4-vinylpyridine) or derivatives thereof,
- polyvinyl alcohol or hydrophilic derivatives thereof,
- polyvinylpyrrolidone, derivatives thereof, or copolymers thereof, or
- a mixture thereof,
said hydrophilic, water-soluble initial polymer having a molecular weight from 1×10⁴ to 1.5×10⁶, in particular from 1×10⁴ to 5×10⁵, the content of hydrophilic, water-soluble initial polymer in the synthesis solution being from 5 to 50%, preferably from 10 to 30%, by weight of the synthesis solution,
(ii) at least one additive selected from:
- a cross-linking agent from 0.05 to 40%, in particular from 1 to 40%, particularly from 5 to 20%, more particularly from 15 to 20%, in particular of 15% or of 20%, by weight of hydrophilic, water-soluble initial polymer,
- a complexing molecule from 1 to 40%, in particular from 1 to 30% by weight of hydrophilic, water-soluble initial polymer, said complexing molecule being selected from: a calixarene, a crown ether, or
- a mixture thereof;
(b) stabilization by heat treatment of the fibres obtained in the preceding step to obtain fibres that are insoluble but swellable in an essentially aqueous effluent,
in said method, said cross-linking agent being selected from the group comprising:
- a diamine, in particular hexamethylenediamine,
- a hydrophilic polymer selected from the group comprising a polyethylene glycol, a polyhydroxyethyl methacrylate, polyvinylpyrrolidone, derivatives thereof or copolymers thereof,
- a (C₁-C₁₀) dibromoalkane, in particular 1,4-dibromobutane
- a dibromo-p-xylene
- a (C₁-C₁₀) diiodoalkane, in particular 1,4-diiodobutane
- a (C₁-C₁₀) dichloroalkane, in particular 1,4-dichlorobutane, and
- a calixarene of formula I 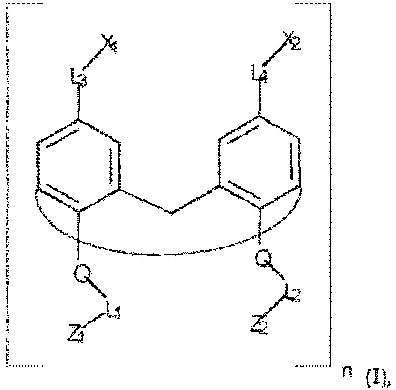
in which:
- X₁ and X₂ each represent, independently of one another, H or a group 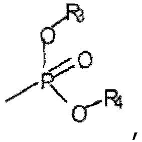 in which R₃ and R₄ each represent, independently of one another, H or a (C₁-C₈) alkyl group, provided that X₁ and X₂ do not represent H simultaneously,
- L₁, L₂, L₃ and L₄ are spacer groups, selected independently of one another from the group consisting of a (C₃-C₁₀) cycloalkylenyl, O, NH, -(CH₂)_{q}-, q being an integer from 1 to 12,
- Z₁ and Z₂ each represent, independently of one another, a functional group selected from an optionally protected amine, F, Cl, Br, I, OH, C(=O)H, C(=O)Hal, an aryl group or a substituted aryl group, such as a tosyl, a diazonium group, an aromatic heterocycle such as a pyrrolyl, furyl, thienyl, or pyridinyl group, an optionally protected sulphate or sulphonate group,
- n is an integer from 1 to 10; or a calixarene of formula II 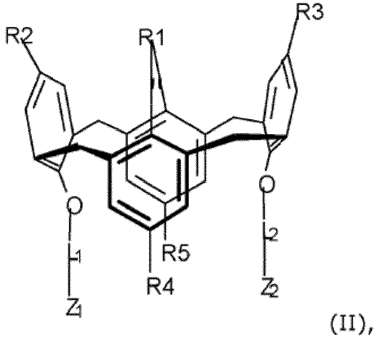 in which:
- R1 is selected from -X(C2H4X)m-, or -X(C₂H₄X)_{p/2}YX(C₂H₄)_{p/2}-, X being selected independently from O and/or N, m being equal to 3, 4, 5 or 6, p being equal to 2 or 4, Y being a (C₃-C₁₀) cycloalkylene or a (C₆-C₁₀) arylene; and
- R₂ to R₅ are selected independently of one another from H, or a (C₁-C₆) alkyl;
- L₁ and L₂ are spacer groups, selected independently of one another from a (C₃-C₁₀) cycloalkylene or a (C₃-C₁₀) arylene, -(CH₂)_{q}-, q being an integer from 1 to 12;
- Z₁, Z₂ are grafted groups, selected independently of one another from F, Cl, Br, I, -OHNH₂, -C(=O)Hal, -C(=O)OH, an aryl group or a substituted aryl group, such as a tosyl, a diazonium group, an aromatic heterocycle such as a pyrrolyl, furyl, thienyl, or pyridinyl group, an optionally protected sulphate or sulphonate group
a (C₂-C₁₀) polyol containing from 2 to 4 hydroxyl groups, in particular a (C₂-C₁₀) alkanediol.
